## Europäisches Patentamt
## European Patent Office
## Office européen des brevets

(11) Publication number: **0 059 275**
**B1**

## (12) EUROPEAN PATENT SPECIFICATION

(45) Date of publication of patent specification: **21.11.85**

(51) Int. Cl.[4]: **B 01 D 13/00**

(21) Application number: **81300820.8**

(22) Date of filing: **27.02.81**

(54) **Reverse osmosis apparatus and method of using integral valve.**

(43) Date of publication of application:
**08.09.82 Bulletin 82/36**

(45) Publication of the grant of the patent:
**21.11.85 Bulletin 85/47**

(84) Designated Contracting States:
**DE FR GB IT**

(56) References cited:
**EP-A-0 018 128**
**DE-A-2 850 650**
**US-A-3 825 122**
**US-A-4 187 173**

(73) Proprietor: **SEAGOLD INDUSTRIES CORPORATION**
**4008 Myrtle Street**
**Burnaby British Columbia V5C 4G2 (CA)**

(72) Inventor: **Keefer, Bowie Gordon**
**4324, West 11th Avenue**
**Vancouver British Columbia V6R 2M1 (CA)**

(74) Representative: **Yelland, William Alan et al**
**H.N. & W.S. SKERRETT Rutland House 148,**
**Edmund Street**
**Birmingham B3 2LQ (GB)**

Courier Press, Leamington Spa, England.

## Description

### Field of the invention

The invention relates to a reverse osmosis apparatus and method particularly adapted for, but not limited to, desalination of salt water on a relatively small scale.

### Prior art

Reverse osmosis desalination of salt water is achieved by using semi-permeable membranes which selectively permeate purified water from a pressurized feed solution of brine, while simultaneously rejecting a more concentrated concentrate fraction. In a continuous process, a concentrate stream of high salinity must be exhausted from the pressure vessel at almost full working pressure, and it is known to depressurize the concentrate stream in such a manner as to recover energy which is then used to pressurize the feed fluid. Such apparatus and method is shown in B. G. Keefer's United States Patent No. 4,187,173, issued 5th February 1980, which discloses a relatively compact and lightweight apparatus having a lever connected to a feed pump and also to a main directional valve controlling the concentrate fluid flow. Due to its relatively lightweight and low horsepower requirements, the device of this U.S. Patent can be manually operated and thus can be used in marine life rafts, or for manual transportation in areas of the country where acceptable drinking water is difficult to find. In particular, this U.S. Patent discloses a pumping apparatus for a membrane separation apparatus for separating a feed fluid into permeate fluid and concentrate fluid fractions which respectively are permeated and rejected by selective membrane means, the pumping apparatus including: a reciprocating feed pump having a feed cylinder, a feed displacer means and a displacer rod, the feed displacer means being reciprocable relative to the feed cylinder and dividing the feed cylinder into a pumping chamber in which feed fluid is pressurized and an expansion chamber in which the concentrate fluid fraction is depressurized; the displacer rod having an axis and cooperating with the feed displacer means to be reciprocable therewith and passing into the feed cylinder so that the pumping chamber has a swept volume greater than that of the expansion chamber, an inlet conduit having an inlet valve and communicating with the pumping chamber to admit feed fluid thereinto, an outfeed conduit having an outfeed valve and adapted to communicate the pumping chamber with the membrane means to deliver feed fluid to the membrane means, return conduit means adapted to communicate the membrane means with the expansion chamber to conduct concentrate fluid from the membrane means, and an exhaust conduit communicating with the expansion chamber to exhaust concentrate fluid; main valve means having first and second open positions for controlling concentrate fluid flow from the expansion chamber to exhaust, and to the expansion chamber from the return conduit means respectively, the main valve means being responsive to direction of reciprocation action applied to the pump such that reversal of the reciprocation action reverses the main valve means.

Further, there is disclosed in the present applicant's EP—A—0018128 apparatus which is similar to the aforesaid apparatus except in that the main valve means is positively mechanically actuated by a crank offset in phase from a further crank driving the displacer rod.

### Summary of the invention

The pumping apparatus according to the present invention is of the kind described in US—A—4187173, and is characterised by the main valve means being mounted for actuation relative to and along the axis of the displacer rod and having at least one movable valve member which can move axially a limited amount relative to the displacer rod during stroke reversal, the amount of movement being sufficient to provide between the first and second open positions an intermediate position during which the main valve means is closed.

The apparatus of the invention incurs only negligible pressure loss during valve acceleration.

The apparatus of the present invention has a similarity with applicant's previous disclosure in said U.S. Patent, in that the main directional valve means directing concentrate fluid for energy recovery and exhaust is actuated as a result of a reaction to driving action applied to a feed piston or feed displacer operating the pressurizing pump. However, the apparatus of the present invention differs specifically from this prior disclosure in that the main valve mechanism is actuated by a force which is in the same direction as position or displacer rod motion during its stroke, and this force is transmitted to the valve without the intervening linkage or separate crank required by the prior disclosures to reverse the direction of the force. Also, in preferred embodiments of the present invention, a recirculating pump is coupled to the piston rod and provides a flow of pressurized concentrate fluid over the membranes during the period of stroke reversal of the feed displacer. Whilst recirculating concentrate fluid is known, to the inventor's knowledge, it is not known to use a recirculating pump as a mechanically operated accumulator phased to provide a pressurized flow of fluid over the membranes, and thus permeate fluid discharge, during an induction stroke of the feed cylinder. This reduces considerably fluid flow and fluid pressure fluctuations on the membranes, and enables a more uniform power input to the drive mechanism. Structurally the apparatus is simplified by providing aligned feed and recirculating cylinders and appropriate main fluid flow valves, which are all operated by a single reciprocating drive rod. This can be crank driven as is a simplex tandem pair of feed and recirculator pumps, or multiplex pairs can be coupled to a multiple throw crankshaft.

The invention further relates to method of membrane separation of a feed fluid into permeate fluid and concentrate fluid fractions which respectively are permeated and rejected by selective membrane means, the membrane means being exposed to pressurized feed fluid supplied by a reciprocating pumping apparatus as above described and includes the steps of during an induction stroke, inducting feed fluid into the pumping chamber and simultaneously exhausting concentrate fluid from the expansion chamber followed by reversing direction of reciprocating action applied to the pump means so as to move the main valve means between the two positions and subsequently during a pumping stroke pressurizing the feed fluid in the pumping chamber and simultaneously admitting pressurized concentrate fluid into the expansion chamber to supplement energy supplied to the displacer in the pumping stroke. The method is characterized by upon reversal of reciprocation action, causing relative movement between at least one valve member of the main valve means and the displacer rod, the amount of movement being sufficient to provide between the first and second open positions a closed intermediate position during which the main valve means is closed so as to incur negligible pressure loss during valve actuation.

The apparatus and method are particularly applicable for use with non-constant power sources such as manual power, or with energy recovery devices for recovering energy from ocean waves, wind, etc. Such energy sources provide a reciprocating motion which is often characterized by non-constant amplitude and frequency. The apparatus generally as above described is further characterized by a feedback conduit extending from a permeate conduit carrying permeate fluid discharged from the membrane means to the inlet conduit. A feedback valve means controls flow within the feedback conduit and the permeate conduit, and is responsive to permeate fluid quality so as to open the permeate conduit and to close the feedback conduit when permeate fluid quality is above a predetermined limit, and to close the permeate conduit and to open the feedback conduit when permeate fluid quality is below the predetermined limit so as to return unacceptable permeate fluid for reprocessing by the apparatus.

A detailed disclosure following, related to drawings, describes preferred embodiments of the apparatus and method according to the invention which are capable of expression in apparatus and method other than those particularly described and illustrated.

Description of the drawings

The drawings of the pumping apparatus, which are described briefly below, are shown as simplified sections, and are drawn partially diagrammatic and with some dimensions exaggerated for clarity.

Figure 1 is a first embodiment of a reverse osmosis apparatus using poppet-type main directional valve means integral with displacers, the apparatus being shown in an induction stroke,

Figure 2 is fragmented and shows the apparatus in a pumping stroke.

Figure 3 is a second embodiment of the invention using a sleeve-type main directional valve means integral with a feed displacer, the apparatus being shown in an induction stroke,

Figure 4 is fragmented and shows the second embodiment of the apparatus in a pumping stroke,

Figure 5 is a third embodiment of the invention, using a sleeve-type main valve means integral with a displacer rod, the apparatus being shown in an induction stroke, and

Figure 6 is a simplified fragmented side elevation of the invention used in a wave powered desalinating apparatus.

Detailed disclosure

Figures 1 and 2

A membrane separation apparatus 10 includes a first embodiment 12 of a pumping apparatus, a membrane pressure vessel 14 containing selective membrane means 15, an accumulator 11, and a pressure relief valve 13, coupled together by conduits. Feed fluid 16, eg. brine, is inducted into the pump through an inlet conduit 17 and is separated by the membrane means into permeate fluid and concentrate fluid fractions 18 and 19 which respectively are permeated and rejected by the membrane means and are discharged from the apparatus through a permeate discharge conduit 20 and a concentrate discharge conduit 21.

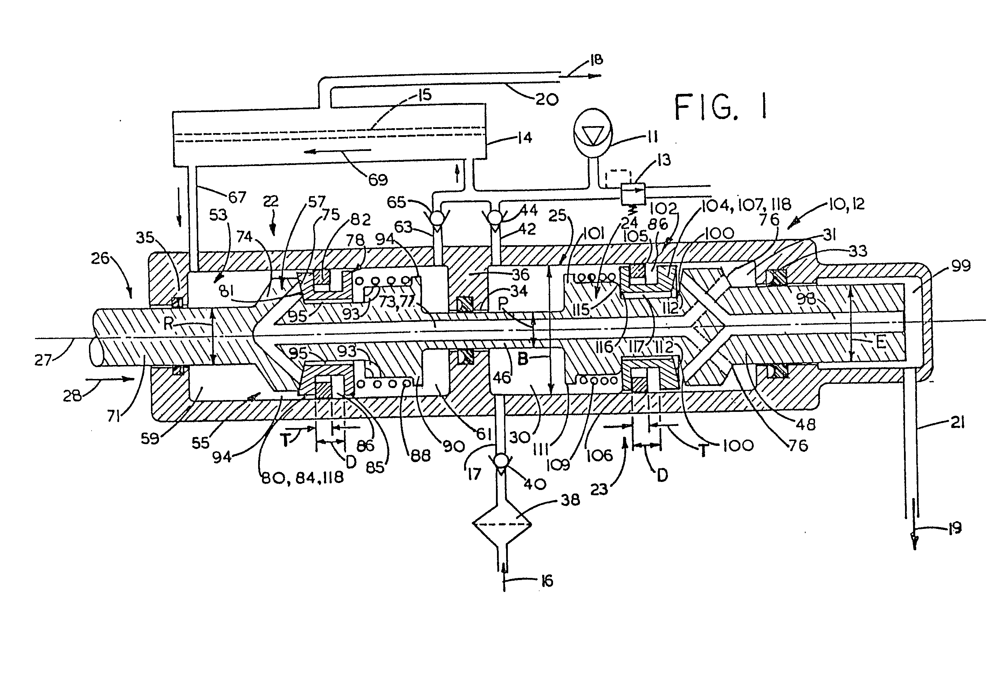

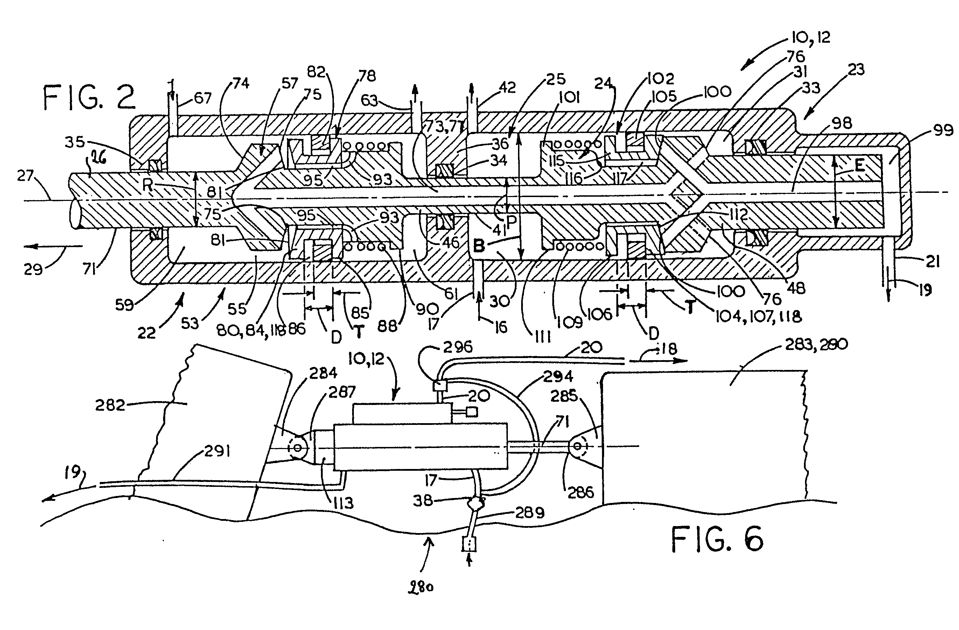

The pumping apparatus 12 includes a pump body 22 incorporating a reciprocating feed pump 23 having a feed cylinder 25, a feed displacer means 24, and a displacer rod 26 having a rod axis 27. The feed displacer is reciprocable relative to the feed cylinder along the axis and divides the feed cylinder into a pumping chamber 30 and an expansion chamber 31. The rod 26 moves in direction of an arrow 28 during an induction stroke of the feed cylinder, see Figure 1, and in direction of an arrow 29 during a pumping stroke of the feed cylinder, see Figure 2. The displacer rod carries the feed displacer means so as to be reciprocable therewith and is carried in three axially spaced bearings 33, 34 and 35 in the body, which are provided with undesignated seals to prevent leakage of fluid passed the bearings. The bearings 33 and 35 are at opposite ends of the body, and the bearing 34 is in a dividing wall 36 at an inner end of the feed cylinder. The inlet conduit 17 has an optional low pressure filter 38 and a non-return inlet valve 40, eg. a ball check valve, and communicates with the pumping chamber to admit feed fluid thereinto. An outfeed conduit 42 has a non-return outfeed valve 44 and is adapted to communicate the pumping chamber with the membrane means to deliver feed fluid to the membrane means.

The displacer rod has a pumping rod portion 46 extending from the displacer means through the pumping chamber 30 and the bearing 34, and an expansion rod portion 48 extending from the displacer means through the expansion chamber and the bearing 33. The two portions are co-axial with each other and the axis 27 and preferably integral to provide a rigid support for the feed displacer means 24. The expansion rod portion has a diameter E and the pumping rod portion has a diameter P, P being smaller than E so that the expansion rod portion has a cross sectional area greater than the pumping rod portion by a rod cross sectional area difference which defines approximately the permeate fluid fraction displacement of the feed pump per stroke resulting from relative swept volumes of the chambers. Thus, the pumping chamber has a swept volume greater than that of the expansion chamber and the ratio of the swept volumes of the chambers determines approximate recovery ratio of the permeate fluid fraction to the total feed fluid flow. The feed cylinder 25 has a bore having a diameter B, and it can be seen that the conversion ratio of the feed fluid into permeate fluid is defined approximately by the above rod cross sectional area difference divided by the difference between the cylinder cross sectional area and the cross sectional area of the pumping rod portion.

The pumping apparatus 12 also includes a recirculating pump 53 separated from the feed pump by the wall 36, the pump 53 having a recirculating cylinder 55 and a recirculating displacer means 57. The pumping rod portion 46 of the displacer rod extends between the recirculating displacer means 57 and the feed displacer means 24, and thus, the displacer rod 26 carries both the feed displacer means and the recirculating displacer means for simultaneous relative movement in the same direction upon actuation of the pump. Thus, the recirculating displacer means is reciprocable relative to the recirculating cylinder and divides the recirculating cylinder into a receiving chamber 59 and a delivery chamber 61. A delivery conduit 63 has a one-way delivery check valve 65 therein and communicates with the membrane vessel as shown, for example by feeding into the outfeed conduit 42 from the pumping chamber. A receiving conduit 67 extends from the membrane vessel 14 and communicates with the receiving chamber 59. Flow of fluid through the membrane vessel is in direction of an arrow 69 and thus the receiving chamber receives concentrate fluid from the membranes and the delivery chamber delivers concentrate fluid to the membranes as will be described.

The displacer rod also has a recirculating rod portion 71 extending from the recirculating displacer means 57 through the receiving chamber 59 and through the bearing 35 to an outer end coupled to a reciprocating drive means, not shown. The recirculating rod portion has a diameter R which has a cross sectional area such that the rod cross sectional area difference between the expansion rod portion 48 and the pumping rod portion 46 is approximately twice the difference in cross sectional areas between the recirculating rod portion 71 and the pumping rod portion 46. Thus, the cross sectional area of the recirculating rod portion is larger than the cross sectional area of the pumping rod portion and smaller than cross sectional area of the expansion rod portion. This can be expressed mathematically as follows:

$$2(R^2 - P^2) \simeq (E^2 - P^2)$$

The displacer rod 26 carries a connecting conduit 73 extending from a connecting conduit valve seat 75 adjacent an opening of the connecting conduit on a recirculating displacer body portion 74 of the recirculating displacer means 57 to a connecting conduit port 76 communicating with the expansion chamber. It can be seen that the connecting conduit 73 is bifurcated at each end, and thus, communicates with at least two seats 75 and two ports 76, although one of each may be sufficient for some purposes. As will be described, the connecting conduit is one portion of a return conduit means 77 which is adapted to communicate the membrane means with the expansion chamber to conduct concentrate fluid from the membrane means. The return conduit means has, in fact, three portions, namely the receiving conduit 67 communicating the receiving chamber with the membrane vessel, the connecting conduit 73 as previously described which communicates the receiving chamber with the expansion chamber, and portions of the recirculating cylinder. For simplicity, the connecting conduit seat 75 can also be referred to as the return conduit valve seat. Thus, it can be seen that the displacer rod has a portion of the return conduit therein and at least one return conduit valve seat associated with the return conduit means 77.

The recirculating displacer means 57 has a recirculating displacer member 78 mounted on the recirculating body portion 74 of the displacer rod for limited axial movement relative thereto. The recirculating displacer member 78 has a pair of annular flanges 84 and 85 spaced apart at a distance D, the flange 84 having an annular poppet valve portion 80 having a poppet valve face 81 complementary to the return conduit valve seat 75, thus serving as a return valve member. The recirculating displacer means 57 includes a piston ring member 82 fitted between the flanges 84 and 85 to cooperate with the member 78 and to provide sliding and sealing contact with a bore of the recirculating cylinder. The distance D is greater than thickness T of the piston ring member 82, which leaves a gap 86 between the flange 85 and the ring member 82. The gap 86 is sufficient to permit the displacer member 78 to move axially relative to the ring member 82 disposed between the two flanges without moving the ring member 82, ie. to provide lost motion, which provides a dwell period for actuation of the valve means as will be described. A compression coil spring 88 extends between the displacer member 78 and an annular flange 90 of the displacer body portion 74 so as to urge the recirculating displacer member against the valve seat 75 so as to close the connecting conduit 73, and has sufficient strength to overcome friction of the piston ring member 82 on the cylinder wall. The valve seat 75 is normally closed by force of the spring on the member 78, which force is augmented by fluid and friction forces in a recirculating discharge stroke as seen in Figure 1, but is open in a recirculating recovery stroke as seen in Figure 2. Both end portions of the body portion 74 are spaced from the recirculating cylinder wall to provide clearance 94 for fluid flow therearound, only the piston ring member 82 providing sealing engagement with the recirculating cylinder wall. Transfer conduits 93 extend from an annular clearance 95 between the displacer member 78 and the recirculating displacer body portion 74 to provide passage for fluid from the receiving chamber to the delivery chamber as will be described.

Thus, the recirculating displacer means has a recirculating displacer member mounted on the displacer rod for axial movement relative thereto. The recirculating displacer member has a return valve member, ie. the valve portion 80, cooperating with the return conduit valve seat or opening 75 so as to selectively open and close the return conduit upon appropriate relative motion between the recirculating displacer member and the displacer rod. It can be seen that the ring member 82 is a sealing member, and the recirculating displacer member has limited reciprocable movement relative to the sealing member to permit actuation of the valve without corresponding recirculating displacer means movement.

The displacer rod 26 has a portion of an exhaust conduit 98 therein, and a feed displacer body portion 101 which carries an exhaust conduit valve seat 100 adjacent an opening at one end of the exhaust conduit. Similarly to the connecting conduit, the exhaust conduit 98 is bifurcated and thus communicates with at least two exhaust conduit valve seats 100, although one seat may be adequate. The exhaust conduit 98 communicates with an exhaust chamber 99 at one end of the pump body, the exhaust chamber communicating with the concentrate discharge conduit 21 to discharge concentrate fluid from the apparatus as will be described.

The feed displacer means 24 has a feed displacer member 102 mounted on the feed displacer body portion 101 for limited axial movement relative thereto, and a piston ring member 105. The feed displacer member has a pair of annular flanges 106 and 107 spaced apart at the spacing D, the flange 107 having an annular poppet valve portion 104. The spacing D is greater than thickness T of the piston ring member 105 disposed between the flanges to provide lost motion between the piston ring member and the feed displacer member 102 in a manner similar to that previously described with reference to the recirculating displacer member 78. A compression coil spring 109 extends between an annular flange 111 on the feed displacer body portion and the feed displacer member 102 so as to urge a first poppet valve face 112 of the flange 107 against the exhaust conduit valve seat 100 to provide a normally closed exhaust valve. Thus, the feed displacer member 102 serves as an exhaust valve member to control the exhaust conduit 98. The displacer member 102 also has a second poppet valve face 115 which cooperates with a displacer body valve seat 116 on the displacer body portion 101 to form a fluid seal between the portion 101 and the member 102. The fluid seal is formed on the feed induction stroke as shown in Figure 1, when initially friction drag of the ring member 105 on the bore, later augmented by fluid pressure forces, holds the member 102 against the displacer body portion 101 to prevent flow of fluid between the expansion and pumping chambers. An annular clearance 117 is provided between a bore of the displacer member 102 and the feed displacer body portion 101, which clearance is normally closed at one end thereof, but both ends are open for a short interval at the end of each displacer stroke, as will be described. As the piston ring member 105 is in sealing engagement with the bore of the feed cylinder 25, sufficient relative motion between the displacer member moves the piston ring member along the bore to produce induction and pumping strokes.

Thus, the feed displacer means has a feed displacer member mounted on the feed displacer rod for axial movement relative thereto, the feed displacer member having an exhaust valve member, ie. the valve portion 104, cooperating with the exhaust conduit valve seat or opening so as to selectively open and close the exhaust conduit upon appropriate relative motion between the feed displacer member and the displacer rod.

Operation

A reciprocating linear force is applied to the displacer rod 26 through the recirculating rod portion 71 which extends through an end face of the pump remote from the exhaust chamber. Referring to Figure 1, in a feed cylinder induction stroke the rod moves in direction of the arrow 28 so that fluid forces on the recirculating displacer member 78 and friction force on the ring member 82 augment spring closure of the connecting conduit 73. Also in the induction stroke, friction and fluid forces lift the member 102 from the valve seat 100 so as to maintain the exhaust conduit 98 open, and hold the valve face 115 against the body valve seat 116 to seal the displacer member 102 against the body portion 101. Thus, feed fluid is inducted through the conduit 17 and the inlet valve 40 into the pumping chamber 30, and the outfeed valve 44 is maintained closed. Simultaneously concentrate fluid is exhausted from the expansion chamber 31 through the exhaust conduit 98, and into the exhaust chamber 99 and is discharged from the pump through the discharge conduit 21. In the recirculating cylinder, as shown in Figure 1, the ring member 82 and the spring 88 augmented by fluid pressure act on the valve portion 80 to essentially prevent fluid passing the recirculating displacer means so that the clearance 94 between the displacer means 57 and the recirculating bore is closed so that the displacer means 57 displacers fluid to the membrane vessel. Thus, the recirculating pump is executing a discharge stroke and the delivery valve 65 is held open by discharge of concentrate fluid from the delivery chamber 61 which is displaced through the delivery conduit 63 into the membrane vessel 14. As the recirculating displacer executes the discharge stroke, concentrate fluid from the delivery chamber 61 passes through the valve 65, across the pressure face of the membrane means 15 and returns through the receiving conduit 67 into the receiving chamber 59. Thus, a relatively steady stream of concentrate fluid passes the pressure side of the membranes during the induction stroke of the feed cylinder so as to reduce concentration polarization effects which would otherwise tend to occur without the recirculating pump.

During the recirculating discharge stroke, the recirculating rod portion 71 passes further into the recirculating cylinder and the pumping rod portion 46 passes further out from the delivery chamber. Because the recirculating rod portion has a larger cross sectional area than the pumping rod portion, there is steadily increasing volume of displacer rod entering the recirculating cylinder. The increasing rod volume is proportional to cross sectional area differences between the rod portions on opposite sides of the recirculating displacer means and thus increases displacement of fluid from within the recirculating cylinder. The displacement increase is experienced by the membranes which accordingly discharge permeate fluid essentially continuously and thus the working pressure on the membranes is maintained. Thus permeate fluid is discharged even during an induction stroke of the feed cylinder, ie. a non-pressurizing stroke, which contrasts with some prior art recirculating pumps known to the inventor which would merely maintain flow across the membranes with a reduction or stoppage of permeate discharge. In view of the ratios of the rod cross sectional area differences, as expressed in the equation on page 7, it can be seen that approximately half of the permeate fluid fraction discharged per complete cycle of the pump is discharged during the induction stroke. The recirculating rod portion 71 is thus a displacement means associated with the recirculating cylinder to increase volume of the displacer rod passing into the recirculating cylinder during an induction stroke of the feed cylinder, ie. a discharge stroke of the recirculating cylinder. The portion 71 is in effect an extension rod portion extending from the recirculating displacer means on a side thereof remote from the pumping rod portion so as to pass through an end of the recirculating cylinder remote from the feed cylinder, the extension rod portion having a cross sectional area different from the pumping rod portion. In effect, the recirculating pump is acting as a mechanically actuated accumulator, ie. a non-resilient, positively driven, accumulator which stores a volume of fluid to provide permeate discharge flow during an induction stroke of the feed cylinder approximately equal to permeate flow discharged during a feed pumping stroke.

When the displacer reaches an end of the induction stroke and stops moving in direction of the arrow 28, the return valve member 80 on the recirculating displacer means remains sealing the return conduit 73. Also, the exhaust valve member 104 of the feed displacer remains clear of the exhaust conduit valve seat 100 until force from the spring 109 forces the member 102 off the displacer body valve seat 116. While this occurs, a little fluid flows between the chambers 31 and 30 whilst the member 102 is between the seats 100 and 116, ie. until the member 102 contacts the exhaust conduit valve seat 100, thus closing the conduit and preventing further communication between the chambers 30 and 31. The fluid flow between the chambers prevents hydraulic lock and permits valve closure. When the valve member 104 first seals the valve seat 100, as shown in Figure 2, the valve member 80 still maintains the conduit 73 closed as in Figure 1, but the valve condition at this instant of time is not shown. Thus, both the conduit 73 and conduit 98 are closed by their respective valves at the instant when the rod 26 is stationary and prior to reversal of motion of the rod.

Referring to Figure 2, when the rod reverses direction of reciprocation to start a feed pumping stroke and moves in direction of the arrow 29, the recirculating displacer member 78 follows the displacer rod movement until the flange 85 contacts the ring member 82. The member 78 now remains stationary whilst the displacer rod continues to move to the left, thus effectively opening the return conduit as the spring 88 is compressed. There is thus a period of time immediately following the beginning of the pumping stroke when both conduits 73 and 98 are closed, ie. the valves overlap, and this is termed the "dwell period" or "interval" and, depending on relative spaces between the flanges of the valve members and thickness of the piston rings, the dwell interval can be about 10% of displacer stroke. During this interval, there is essentially zero fluid flow along the connecting conduit 73 and the exhaust conduit 98, and thus, there is zero fluid flow relative to the expansion chamber. Because of the valve overlap occurring during the dwell period, there is little likelihood of direct leakage from the return conduit to the exhaust conduit or chances of hydraulic lock occurring. During this dwell interval, the pressure in the chambers 30 and 31 is approximately equal and is being increased toward the discharge pressure by compression action of the difference in cross sectional areas of the expansion and pumping rods, ie. the rod cross sectional area difference.

Referring to Figure 2, during a feed cylinder pumping stroke, the displacer rod moves in direction of the arrow 29 and the member 78 is shifted to expose the valve seat 75 so as to open the connecting conduit 73, and the member 102 is shifted to engage the valve seat 100 so as to close the exhaust conduit 98. In the pumping stroke, feed fluid is pressurized in the pumping chamber and forced through the outfeed conduit 42, past the outfeed valve 44 into the membrane vessel 14, the delivery valve 65 being closed. The feed fluid is separated by the membrane means into the permeate fluid fraction which permeates across the membranes and is discharged as the permeate fluid, and the concentrate fraction rejected by the membranes passes through the receiving conduit 67 into the receiving chamber 59. Some of the concentrate fluid within the recirculating cylinder passes through the connecting conduit 73 and is discharged into the expansion chamber 31 at high pressure as the feed displacer executes the pumping stroke, thus supplementing energy applied to the feed displacer, reducing overall energy requirements. In the recirculating pump the clearance 94 across the recirculating displacer means is exposed by the relative movement of the member 78 and concentrate fluid flows between the chambers of the recirculating cylinder. Thus, it can be seen that the recirculating feed displacer means has a recirculating valve means associated with the recirculating pump to control, in part, flow of concentrate fluid relative to the recirculating pump, ie. relative to the receiving and delivery chambers, so that upon reversal of pumping action of the pump, the recirculating valve means shifts between two positions thereof.

Thus, the induction stroke is followed by pressurizing the feed fluid in the pumping chamber and simultaneously admitting concentrate fluid from the membrane means into the expansion chamber to depressurize the concentrate fluid therein to supplement energy supplied to the feed displacer in the pumping stroke. The concentrate fluid is discharged through the receiving conduit 67 into the receiving chamber 59 and mixes with the concentrate fluid already in the receiving chamber 59, and some of it will pass through the connecting conduit 73 to the expansion chamber, whilst the remainder passes through the clearance 94 and the annular clearance 95 between the displacer and the member 78 and through the transfer conduit 93 into the delivery chamber. Thus, there is a transfer of concentrate fluid from the receiving chamber into the delivery chamber during a pumping stroke, whilst some of the concentrate fluid is discharged into the expansion chamber.

When the displacer rod reaches the end of the pumping stroke and stops moving in direction of the arrow 29, the exhaust valve portion 104 of the feed displacer means remains sealing the exhaust conduit 98, and the return valve portion 80 of the recirculating displacer means 54 remains clear of the return conduit valve seat 75 until force from the spring 88 forces the member 78 against the valve seat 75 to close the connecting conduit 73 as in Figure 1. Closing the conduit 73 occurs shortly after the displacer rod stops, and the exhaust conduit 98 remains closed until shortly after the beginning of the induction stroke until the flange 106 contacts the ring member 105. This condition of the two closed valves is also not shown. Thus the valves of the displacer members 78 and 102 close their respective conduits for a short period of valve overlap following the beginning of the induction stroke to provide a dwell interval prior to opening the exhaust conduit 98 for a repeat of the induction stroke as seen in Figure 1. Again fluid can flow between the chambers 30 and 31 when the feed displacer member 102 is between the seats 100 and 116. The pressure in the chambers 30 and 31 is approximately equal and is reduced to approach suction pressure during the dwell interval at the beginning of the next induction stroke.

One important feature of the invention is to provide the dwell interval between valve actuation at the end of each stroke to increase tolerance to inaccurate valve timing so as to reduce the chances of pressure loss or hydraulic lock occurring. Both the exhaust valve portion 104 and the return valve portion 80 cooperate with respective piston ring members 105 and 82 so that the valve portion (104 or 80) can shift between open and closed positions prior to movement of the piston-ring member. It can be seen that movement of the piston ring member 105 itself with the member 102 controls displacement of fluid from the feed cylinder, and movement of the ring member 82 with the member 78 in the discharge stroke controls displacement of fluid from the recirculating cylinder. This relative movement or lost motion is attained by making the piston ring member a loose fit on the valve portion, that is the piston ring has a width less than space between flanges of the valve portion so as to permit axial movement of the valve portion between open and closed positions prior to movement of the piston ring member.

During the dwell period following the end of an induction stroke, the feed displacer means 24 is essentially stationary and the displacer rod 26 moves a limited amount during which the expansion rod portion 48 enters the expansion chamber and the pumping rod portion 46 leaves the pumping chamber. Due to the cross-sectional area difference between the rod portions 46 and 48, the rod displacement within the feed cylinder 25 is increased. This displacement increase increases pressure in the expansion chamber which has just completed an exhaust stroke and is thus low, and this increase in pressure is transmitted to the connecting conduit 73. When the connecting conduit valve seat 75 is opened to high pressure concentrate fluid in the recirculating cylinder, the higher pressure in the conduit 73 is approximately equal to the concentrate pressure on the opposite side of the valve portion 80, and this reduces inrush of fluid upon valve opening, thus reducing hydraulic shock and wear of the return valve portion 80. Similarly, prior to opening the poppet valve portion 104 after a dwell period following a pumping stroke, the expansion rod portion 48 has withdrawn from the expansion chamber so as to reduce pressure therein prior to opening the valve portion 104 to exhaust depressurized concentrate fluid from the expansion chamber. Thus pressure differences across ports of the exhaust valve member 104 are also approximately equalized.

Thus the displacer rod area differences on opposite sides of the feed displacer means 24 serve as plunger means associated with displacer rod to essentially equalize pressure differences across ports of the return valve means and the exhaust valve means after commencement of a displacer rod stroke and prior to opening of such ports. This approximate equalization of pressure is another important feature of the invention, which is accomplished by having a dwell interval of sufficient length of time relative to the bulk modulus of the fluid and elasticity of the feed cylinder. The dwell interval is necessary to approximately equalize pressures as above.

It is noted that the lost motion or axial movement of the valve portion relative to the instantaneously stationary piston ring member occurs upon reversal of force applying reciprocation action to the pump means and this can occur at any instant during the stroke of the displacer, and thus is not limited to actuation of the valve only when the displacer rod reaches an end of its stroke. This has particular advantages in applications where the force applying the reciprocating action to the displacer rod is irregular, or intermittent, such as occurring in devices harnessing energy from natural motion such as wave action or wind, etc. It can be seen that the valve portions 80 and 104 are actuated sequentially for the control of fluid in the return conduit means and exhaust conduit respectively. For convenience, structure of these two valves for controlling these two functions is referred to collectively as a main valve means 118 for controlling concentrate flow relative to the expansion chamber. In effect, one function of the main valve means is to cooperate with the connecting conduit or return conduit means to control flow of pressurized concentrate fluid from the receiving chamber into the expansion chamber, and the other function is to exhaust depressurized concentrate fluid from the expansion chamber. Structure of the recirculatory displacer member 78 and associated displacer body portion 74 for controlling recirculating fluid flow is referred to as the recirculating fluid valve means.

It can be seen that the main valve means is mounted for actuation relative to, and along the axis of, the displacer rod means and is responsive to direction of reciprocation action applied to the pump such that reversal of reciprocation action reverses the main valve means. Furthermore, it can be seen that the main valve means has effectively first and second open positions, the first open position occurring in an induction stroke when the exhaust conduit is open to discharge fluid to exhaust to provide additional volume for the induction of the feed fluid. In this first position, the exhaust valve means (valve portion 104) is open and the return valve means (valve portion 80) is closed. The main valve means effectively has a second open position occurring during a pumping stroke when the exhaust valve means (valve portion 104) is closed and the return valve means (valve portion 80) is open to direct fluid to the expansion chamber from the return conduit means. In view of the valve overlap or inherent delay between closing one valve and opening the second valve, there is a closed intermediate position during which both valves are closed in the dwell interval. This results from relative spacing between the valve seats and shoulders of the body portions 101 and 74 of the feed displacer and the recirculating displacer, and overall width of each valve or displacer member 102 and 78.

Alternatives and equivalents

Many equivalents of the embodiment 12 are envisaged that could utilize the several advantages of this invention. Alternative means of providing lost motion between the rod and feed displacer means and recirculating displacer means to provide the dwell interval can be substituted. The poppet valve member of the feed or recirculating displacer means need not necessarily have a respective sealing member cooperating therewith to provide sealing contact with a respective cylinder bore as will be noted in later described embodiments. Disposition of conduits within the rod, and valve seats on the rod can also be varied, for example, the connecting conduit seat 75 could be disposed within the receiving chamber 59, so that the connecting conduit could communicate with either chamber of the recirculating cylinder. Also, the recirculating rod portion 71 is shown extending from the recirculating means through the receiving chamber 59. This can be interchanged so as to extend through the delivery chamber. In effect, the rod portion volume ratios serve as displacement means associated with the recirculating cylinder to increase volume of the displacer rod passing into the recirculating cylinder during a discharge stroke of concentrate fluid from the recirculating cylinder to the membrane means to maintain membrane operating pressure to ensure permeate discharge during an induction stroke of the feed cylinder and to assist the pump during a feed cylinder pumping stroke. For the specific rod cross sectional area ratios described, approximately half the permeate fluid volume discharged by the feed cylinder on a pumping stroke is absorbed by the difference in displacement between the expansion rod portion and the pumping rod portion. Also, due to the relatively small pressure and flow fluctuations, the accumulator 11 may be eliminated in some embodiments.

Figures 3 and 4

A second embodiment of a pumping apparatus 125 is shown co-operating with a membrane pressure vessel 126 which communicates through conduits with an accumulator 128 and pressure relief valve 129, generally similar to that previously described. The pumping apparatus 125 has a pump body 132 carrying a displacer rod 134 having a driven end extending from the body and mounted for axial sliding on three sealed bearings 137, 138 and 139 which divide the pump interior into a feed cylinder 141, a recirculating cylinder 142, and an exhaust chamber 143. An end wall 140 seals the pump body 132 at an end remote from the driven end of the rod. The rod 134 moves in direction of arrow 135 during an induction stroke in the feed cylinder, and in direction of arrow 136 during a pumping stroke in the feed cylinder. The feed cylinder 141 has a feed displacer means 145 which divides the feed cylinder into pumping chamber 147 in which feed fluid is pressurized and an expansion chamber 148 in which concentrate fluid is depressurized. The recirculating cylinder 142 has a recirculating displacer means 150 which divides the recirculating cylinder into a receiving chamber 153 and a delivery chamber 155. The displacer rod 134 has an axis 156 and carries the feed displacer means and recirculating displacer means thereon to be reciprocable therewith along the axis as a result of force applying reciprocation action to the rod at an end adjacent the sealed bearing 137.

An inlet conduit 158 having an inlet conduit valve 159 communicates with the pumping chamber 147 to admit feed fluid thereinto, and an outfeed conduit 161 having an outfeed valve 162 communicates the pumping chamber with the membrane means to deliver feed fluid to the membrane means. A delivery conduit 165 having a delivery conduit valve 166 extends between the delivery chamber 155 and the membrane means to supply concentrate fluid to the membrane means, and a receiving conduit 168 extends from the membrane means to the receiving chamber to deliver concentrate fluid from the membrane means.

The displacer rod has an exhaust conduit 170 therein which extends from an opening serving as an exhaust conduit valve port 172 on the rod to the exhaust chamber 143 in the pump body between the sealed bearings 137 and 138. A concentrate discharge conduit 175 extends from the chamber 143 to discharge depressurized concentrate fluid. The displacer rod also has a connecting conduit 176 therein which extends from the receiving chamber 153 to an opening serving as a connecting conduit valve port 179.

The receiving conduit 168, a portion of the recirculating chamber and the connecting conduit 176 provide a return conduit means 178 connecting the membrane vessel with the expansion chamber 148 of the feed pump, and thus, is generally equivalent to the return conduit means 77 of the previously described embodiment. Thus, the return conduit means has three portions including the receiving conduit which communicates the receiving chamber with the membrane vessel, a connecting conduit 176 communicating the receiving chamber with the expansion chamber, and portions of the recirculating cylinder. Thus, it can be seen that the connecting conduit valve port 179 serves as a return conduit valve port or opening which is associated with the return conduit means, a portion of which is fitted within the displacer rod. Similarly to the Figure 1 embodiment, the connecting conduit 176 can communicate with the delivery chamber instead of or included with, the receiving chamber, as shown in broken outline at 176.1. Thus one end of the connecting conduit communicates with the recirculating cylinder.

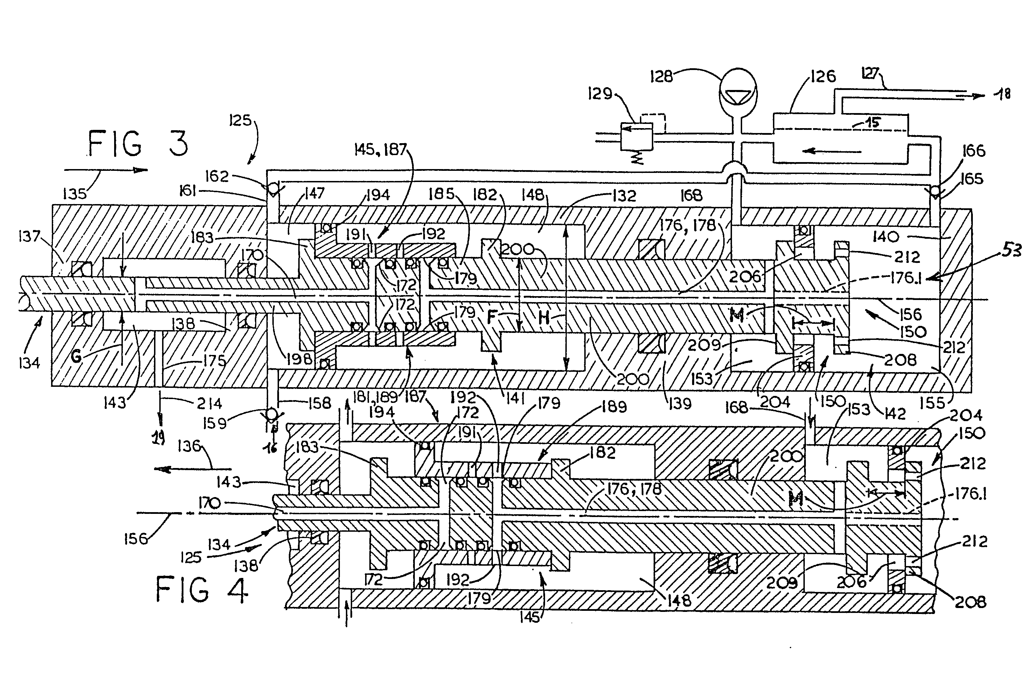

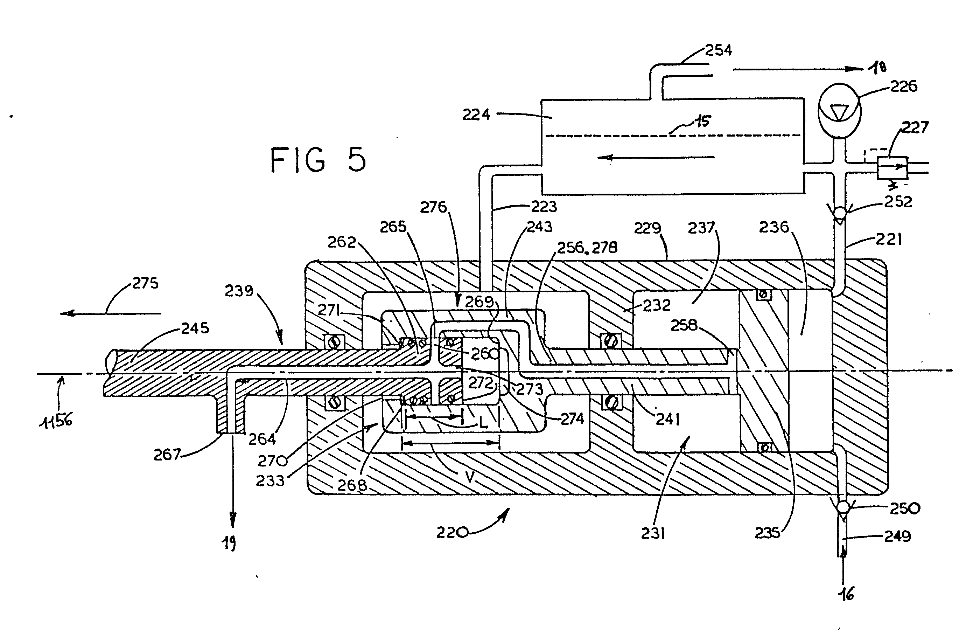

The feed displacer means 145 includes a feed displacer member 181 mounted for reciprocable motion on the feed displacer rod as follows. A portion of the displacer rod within the feed cylinder 141 has a pair of spaced stops 182 and 183 with a spool mounting portion 185 extending between the stops. The spool mounting portion carries the exhaust valve port 172 and the return conduit valve port 179, and is thus a portion of a main valve means 187 controlling fluid flow relative to the expansion chamber. The displacer member 181 includes a valve spool 189 which is axially slidable along the spool mounting portion 185 and has a pair of valve ports 191 and 192 which are adapted to be brought sequentially into alignment with the exhaust valve port 172 and return conduit valve port 179 respectively. The valve spool also carries a piston portion 194 in sealing and sliding contact with a bore of the feed cylinder to divide the feed cylinder into the pumping and expansion chambers. The valve ports 191 and 192 are spaced relative to each other and to opposed end faces of the valve spool so that, when the pump is in an induction stroke as shown in Figure 3, an adjacent portion of the valve spool is against the stop 183 of the displacer rod, and the valve port 191 is in register with the exhaust conduit valve port 172 to communicate the expansion chamber with the exhaust chamber so as to permit discharge of concentrate fluid from the expansion chamber. In the induction stroke the valve port 179 is closed by the valve spool, thus sealing the connecting conduit 176. The port 192 is positioned on the spool so that, when the pump is in a pumping stroke as shown in Figure 4, an adjacent end face of the spool is in contact with the stop 182, the valve port 192 is in register with the return conduit port 179 to receive concentrate fluid from the conduit 176, and the exhaust valve port 172 is closed by a portion of the valve spool 189. Thus, the valve spool serves concurrently as an exhaust valve member and a return conduit valve member which is axially slidable on the spool mounting portion to selectively control the exhaust and return conduit ports, seats, and thus is a portion of the main valve means 187. It can be seen that spacing between the valve ports 172 and 179, and spacing between the valve ports 191 and 192 are such that the ports 172 and 179 cannot be opened at the same time, but both can be closed for a short period or dwell interval during relative movement between the displacer member 181 and the displacer rod to provide a closed intermediate position between two open positions and is equivalent to the dwell means as previously described.

The displacer rod 134 has a pumping rod portion 198 extending from the displacer means through the pumping chamber 147, and an expansion rod portion 200 extending from the displacer through the expansion chamber, and also through the receiving chamber to the recirculating displacer. The expansion rod portion 200 has a diameter F which is greater than a diameter G of the pumping rod portion 198 so that the expansion rod portion has a cross sectional area greater than the pumping rod portion to determine ratio of swept volumes of the pumping and expansion chambers. Thus, similarly to the previously described embodiment, ratio of swept volumes of the pumping and expansion chambers and bore H of the chambers determines the approximate recovery ratio of the permeate fluid fraction to the total feed fluid flow.

The recirculating displacer means 150 includes a recirculating displacer member 204 having an outer periphery in sliding and sealing contact with a bore of the recirculating chamber, and an inner bore which is larger than adjacent portions of the displacer rod so as to provide an annular clearance 206 between the member 204 and the rod 134. The displacer rod has outer and inner stops 208 and 209 thereon within the recirculating cylinder, the stops being spaced apart at a spacing M which is greater than thickness of the member 204. The member 204 is mounted between the stops to permit relative axial motion between the displacer member and the stops upon reversal of motion of the displacer rod. The outer stop 208 has axially aligned bores 212 passing therethrough which communicate with the annular clearance 206 to provide transfer conduit means communicating the receiving chamber with the delivery chamber when the member 204 is against the stop 208 which occurs on a pumping stroke of the displacer rod, ie. on a recovery stroke of the recirculating pump. Thus, in a pumping stroke of the feed displacer as seen in Figure 4, fluid can pass from the receiving chamber to the delivery chamber through the clearance 206 and the bores 212. Thus, the annular clearance between the recirculating displacer member and the displacer rod, and the bores 212 in the stops, provide transfer conduit means communicating the receiving chamber with the delivery chamber which are controlled by the recirculating displacer, so that the transfer conduit means is open during a pumping stroke of the feed displacer as seen in Figure 4, and correspondingly is closed during an induction stroke of the feed displacer as seen in Figure 3.

It can be seen that the second embodiment 125 is generally similar to the first embodiment 12 of Figures 1 and 2, with the exception that the displacer rod 134 of the second embodiment terminates within the recirculating cylinder and does not therefore have a recirculating rod portion extending fully through the recirculating cylinder as in the first embodiment. This modifies fluid flow pressure and characteristics relative to the membrane pressure vessel as will be described. Also, the main valve means 187 of the embodiment 125 incorporates both an exhaust valve portion and a return valve portion integral with a piston portion, thus eliminating the lost motion between the bore sealing member and the valve member of the first embodiment. However, equivalent dwell is provided by the closed intermediate position of the valve spool 189.

In operation, during an induction stroke as shown in Figure 3, the displacer rod moves in direction of the arrow 135 and the feed displacer member 181 rests against the stop 183 so that the valve port 191 is in register with the exhaust conduit port 172, and the port 192 is closed. The recirculating displacer member 204 is held against the outer stop 208, thus preventing flow across the recirculating displacer means 150. Feed fluid is inducted through the inlet conduit 158 into the pumping chamber and depressurized concentrate fluid is exhausted from the expansion chamber 148 through the port 191 and into the exhaust conduit 170 and the exhaust chamber 143 to be discharged from the apparatus per arrow 214. Concentrate fluid in the delivery chamber 155 is displaced by the recirculating displacer means through the delivery conduit and the valve 165 and 166 into the membrane pressure vessel to maintain fluid flow across the membranes, and is returned through the receiving conduit 168 back into the receiving chamber 153. Note that because the connecting conduit 176 is closed by the feed displacer member, there is zero flow in the connecting conduit, and furthermore, the outfeed conduit 161 is closed by the valve 162 due to induction of feed fluid into the pumping chamber.

Referring to Figure 4, in a pumping stroke of the feed displacer, the rod 134 is moving in direction of the arrow 136 and the feed displacer member 181 is moved relative to the displacer rod by friction and fluid forces so as to be held against the stop 182. Thus the valve port 192 is now in register with the connecting conduit port or return conduit port 179 and the exhaust conduit 170 is now closed by the feed displacer member. Also, the recirculating feed displacer member 204 is now in contact with the outer stop 208, thus providing communication through the bore 212 and the annular spacing 206 to permit fluid to flow from the receiving chamber to the delivery chamber. The feed displacer delivers feed fluid to the membranes through the outfeed conduit 161, the outfeed valve 162 and associated conduits, and the permeate fluid fraction which passes the membranes leaves the apparatus through a permeate discharge duct 127. The concentrate fluid fraction rejected by the membranes passes through the receiving conduit 168 into the receiving chamber 153 where some of the concentrate fluid fraction will pass along the connecting conduit 176 to be received in the expansion chamber 148, and some concentrate fluid just received will remain in the recirculating cylinder. It can be seen that as the feed displacer executes the pumping stroke, pressure energy from the concentrate fluid received simultaneously in the expansion chamber is used to supplement energy supplied to the feed displacer during its pumping stroke.

Similarly to the first embodiment, upon reversal of reciprocating action applied to the displacer rod, there is displacer rod movement prior to effective displacer movement or main valve opening. This permits the larger displacement of the expansion portion of the displacer rod to move relative to the feed cylinder and thus act as a plunger means to approximately equalize pressure differences across ports of the main valve means that are about to be opened, prior to opening of such ports, thus reducing valve problems. Furthermore, because the feed displacer means 145 can slide on the portion 185, during the dwell period there is a time for the feed displacer means to move slightly to approximately equalize pressures between the pumping and expansion chambers. Thus the main valve means 187 functions equivalently to the main valve means 118 of Figures 1 and 2 and it can be seen that the main valve means cooperates with at least one of the displacers to control flow of fluid relative to the expansion chamber.

In both embodiments, it can be seen that the feed and recirculating cylinders are in tandem and that the displacer rod has a connecting rod portion extending between the feed displacer means and the recirculating displacer means for simultaneous movement in the same direction. In the first embodiment, the connecting rod portion is the pumping rod portion 46 through which passes the connecting conduit portion 73 of the return conduit means. In the second embodiment, the connecting rod portion is the expansion rod portion 200 through which passes the connecting conduit portion 176 of the return conduit means. In both embodiments, the recirculating cylinder discharges fluid to the membranes during a feed cylinder induction stroke.

Thus, during the pumping stroke of the feed displacer, the membranes are exposed to a pulse of feed fluid during which time concentrate fluid recently rejected by the membranes is mixed with concentrate fluid remaining in the recirculating cylinder, whilst some concentrate fluid is passed through the connecting conduit to be depressurized in the expansion chamber. In the feed induction stroke, the membranes also receive a pulse of concentrate fluid from the recirculating cylinder which is larger than the pulse received during the pumping stroke due to the increase of the displacer rod volume entering the recirculating cylinder. Because of fluctuations in system pressure between strokes, the accumulator 128 is necessary as a means to reduce pressure and fluid flow fluctuations over the membranes. Note that, when compared to the first embodiment, there would be a reduction in permeate fluid delivery during the pumping stroke of the feed displacer, that is when the feed fluid is fed through the membrane pressure vessel to the recirculating chamber. This embodiment would exhibit large driving force fluctuations and thus may be best used in a multiplex pump embodiment to smooth out driving force demands. The wide fluctuations of fluid flows of this embodiment could be reduced by providing an extension or a recirculating rod portion extending clear through the recirculating cylinder as in the first embodiment. The second embodiment would then have an extension rod portion extending from the recirculating displacer means on a side thereof remote from the connecting rod portion so as to pass through an end of the recirculating cylinder remote from the feed cylinder. Preferably the difference in cross sectional areas between the connecting rod portion and extension rod portion would be approximately one half of the rod cross sectional area difference between the pumping and expansion rod portions.

Thus, in summary it can be seen that the feed displacer member is mounted on the feed displacer rod for axial movement relative thereto, the feed displacer member having an exhaust valve member cooperating with the exhaust conduit valve port or opening so as to selectively open and close the exhaust conduit upon appropriate relative motion between the feed displacer member and the displacer rod. The exhaust valve member also cooperates with the return conduit valve port or opening so as to selectively open and close both the exhaust and return conduits upon appropriate motion of the feed displacer member relative to the feed displacer rod. The travel of the feed displacer member between the positions required for opening the return conduit and for opening the exhaust conduit provides a dwell interval to prevent pressure loss from the return conduit to the exhaust conduit, also reduces chances of hydraulic lock and also permits approximate equalization of pressure across the feed displacer means.

Figure 5

The two embodiments previously described incorporate a main valve means within at least the feed displacer means, and also include a recirculation pump to recirculate concentrate fluid past the membranes during an induction stroke of the feed cylinder to reduce concentration polarization effects and provide some continuity of permeate fluid discharge. The apparatus can be simplified to eliminate the recirculation pump, and there would then be no necessity for the displacer rod to pass clear through the pumping chamber because the feed displacer means would be carried on an expansion rod portion passing through the expansion chamber. This ensures that the pumping chamber has a swept volume greater than the expansion chamber. Also, the main valve means controlling concentrate flow can be incorporated into the displacer rod itself and remote from the displacer means, whilst maintaining main valve means actuation colinear with the pumping action as in the previous embodiments. An apparatus of this type is to be described.

A third embodiment of a pumping apparatus 220 according to the invention has outfeed and receiving conduits 221 and 223 communicating with a membrane pressure vessel 224. The conduit 221 also communicates with an accumulator 226 and a pressure relief valve 227 as previously described. The third embodiment has a pump body 229 having a feed cylinder 231 and a valve chamber 233 separated by a dividing wall 232. The feed cylinder has a feed displacer means 235 dividing the feed cylinder into a pumping chamber 236 and an expansion chamber 237. A displacer rod 239 has an expansion rod portion 241 extending through a sealed opening in the dividing wall and carrying the feed displacer means at one end thereof so as to be reciprocable within the feed cylinder along an axis 1156. The expansion rod portion carries at the opposite end thereof a valve sleeve 243 which is fitted within the valve chamber and cooperates with an exhaust rod portion 245 of the displacer rod.

An inlet conduit 249 has an inlet valve 250 and communicates with the feed cylinder to admit feed fluid into the pumping chamber. The outfeed conduit 221 has an outfeed valve 252 to communicate the pumping chamber with the membrane means, and the membrane vessel 224 has a permeate discharge conduit 254 to discharge the permeate fluid fraction. The expansion rod portion 241 has a connecting conduit 256 extending from a connecting conduit port 258 adjacent to the displacer means and communicating with the expansion chamber, and a connecting conduit valve port 260 provided within the valve sleeve 243. The exhaust rod portion 245 has a main valve spool 262 maintained in sliding and sealed contact with a bore of the valve sleeve 243 for reciprocation therein. The rod portion 245 has a discharge conduit 264 which extends from an exhaust conduit valve port 265 on the valve spool to an exhaust discharge port 267 which discharges the concentrate fluid fraction from the apparatus. The valve sleeve 243 has oppositely facing outer and inner annular shoulders 268 and 269 which are spaced apart at a spacing V which is greater than axial length L of the main valve spool 262. An annular clearance 270 is provided between an inner end of the rod portion 245 and an outer portion of the valve sleeve 243.

Figure 5 shows the embodiment 220 during an induction stroke in which the outer shoulder 268 contacts an outer face 271 of the spool, in which position the connecting conduit valve port 260 is in register with the exhaust conduit valve port 265 to provide a continuous passage from the expansion chamber to exhaust. In a pumping stroke, not shown, the valve spool 262 shifts relative to the valve sleeve 243 and an inner face 272 of the spool contacts the inner shoulder 269 so that the connecting conduit valve port 260 is clear of the valve spool and is exposed to the space within the valve sleeve. Thus through the annular clearance 270 the connecting conduit is in direct communication with the valve chamber and thus also with the membrane means, and the discharge conduit 264 is closed by the sleeve 243. A discharge conduit extension 273 communicates with an end space 274 within the valve sleeve to prevent hydraulic lock.

In operation, during the induction stroke as shown, the rod portion 245 moves per arrow 275 and feed fluid is inducted into the pumping chamber 236 and depressurized concentrate fluid within the expansion chamber 237 is displaced by the displacer means 235, through the connecting conduit 256 and the registered valve ports 260 and 265 into the discharge conduit 264 to leave the apparatus through the exhaust discharge port 264. To initiate the pumping stroke, not shown, the exhaust rod portion 245 moves relative to the expansion rod portion 241 causing relative movement between the valve spool and sleeve so that the connecting conduit valve port 260 and the exhaust valve port 265 are temporarily closed in an intermediate position to provide a dwell interval. The dwell interval lasts until the outer face 271 of the spool passes the connecting conduit valve port 260 so as to expose the valve port 260 to the valve chamber. Then concentrate fluid returning from the membrane means through the receiving conduit 223 can pass into the exhaust chamber, and enters the connecting conduit via the valve port 260 to pass into the expansion chamber 237 to supplement energy supplied to the feed displacer means 235 in pressurizing the feed fluid. It can be seen that the exhaust conduit port 265 is closed by the valve sleeve in this position so as to prevent loss of pressure or concentrate fluid through the discharge conduit. When the reciprocating force applied to the rod portion 245 is again reversed, the spool 262 again moves within the sleeve 243 and again passes an intermediate position in which both the connecting conduit and discharge conduit are temporarily closed. This provides the dwell period occurring during the closed intermediate position between two open positions which thus occurs following reversal of reciprocating force. To reduce mechanical shocks resulting from the lost motion in the displacer rod, preferably resilient pads, not shown, are fitted on contacting faces and shoulders of the spool 262 and the sleeve 243.

It can be seen that the valve sleeve 243 and the valve spool 262 serve as main valve means 276 for controlling concentrate fluid flow relative to the expansion chamber, and are mounted for movement relative to and along the axis of the displacer rod means. The valve means is responsive to force applying reciprocation action to the pump such that reversal of force reverses the main valve means. It can be seen that the receiving conduit 223, valve chamber 233 and the connecting conduit 256 serve as a return conduit means 278 adapted to communicate the membrane means with the expansion chamber.

Also, it can be seen that the connecting conduit 256 also serves as a portion of an exhaust conduit means, which together with the discharge conduit 264, communicates with the expansion chamber to exhaust concentrate fluid.

When comparing the first, second and third embodiments, it can be seen that the main valve means of each embodiments has at least one port integral with the displacer rod and a movable valve member cooperating therewith. Each annular poppet valve portion is one valve member of the first embodiment, the sleeve valve feed displacer is the valve member of the second embodiment and a cooperating portion of the displacer rod is the valve member of the third embodiment. The movable valve member can move axially a limited amount relative to the displacer rod during stroke reversal. The amount of movement is sufficient to provide between the first and second open positions a closed intermediate position during which the main valve means is closed, so as to incur negligible pressure loss during valve actuation. In each embodiment, the displacer rod incorporates at least one fluid conduit to conduct fluid relative to the main valve means and this simplifies the manufacturing compared with other devices. The displacer rod is shown incorporating an exhaust conduit adjacent a free end of the rod in Figure 1, or adjacent a driven end of the rod in Figures 3 and 5.

Furthermore, the return valve means, that is the valve controlling the flow of concentrate fluid to the expansion chamber, is shown cooperating with the recirculating displacer in the first embodiment, whereas it is shown cooperating with the feed displacer in the second embodiment, or with the displacer rod itself in the third embodiment. The displacer rod is thus seen to incorporate a portion of the return conduit means, or the exhaust conduit means, or both, so as to conduct concentrate fluid relative to the expansion chamber. In the first and second embodiments, the recirculating valve is characterized by a recirculating fluid transfer means, responsive to pressure differences across the recirculating displacer, to permit fluid to pass between the chambers of the recirculating cylinder in a recovery stroke of the recirculating pump. In all embodiments, upon reversal of reciprocating action applied to the pump means, a portion of the main valve means is simultaneously shifted along the axis essentially directly by resistance to relative movement between the feed displacement means and the feed cylinder.

In summary, in all embodiments the main valve means has a first valve portion connected to a portion of the feed displacer, and a second valve portion associated with a driven portion of the displacer rod. Clearance is provided between the valve portions to permit actuation of the main valve means in response to resistance of the feed displacer means to movement relative to the feed cylinder. It can be seen that the dwell interval results from the clearance between portions of the main valve means to provide lost motion therebetween, ie. to permit the displacer rod to move by itself, upon reversal of pumping action and prior to movement of the feed displacer means.

Figure 6

The pumping apparatus as described above, particularly the apparatus of Figures 1 and 2, has application for use with power sources which have irregular frequencies, and wide fluctuations in amplitude of the stroke and the force of stroke, in particular wave energy recovery devices using a pair of interconnected bodies, at least one body being responsive to wave motion. In general, the bodies may be arranged to follow linear or semi-rotary relative motion of one or both bodies resulting from heaving, pitching or surging of the waves.

A wave energy recovery device 280 has a pair of floating bodies 282 and 283 having respective brackets 284 and 285. The membrane separation apparatus cooperates with the two bodies so that the pumping apparatus 12 extends between the brackets as shown. One end 286 of the recirculating rod portion 71 is hinged to the bracket 285, and a bracket 287 which is carried on the exhaust chamber 99 is hinged to the bracket 284 as shown. Thus, it can be seen that relative motion between the bodies or components resulting from wave action reciprocates the apparatus in an amount dependent on relative movement between the bodies. Clearly, physical stops, not shown, limit excessive movement between the bodies to avoid damage to the apparatus. The inlet conduit 17 and low pressure filter 38 receive the feed fluid through a sea water delivery conduit 289 immersed in the sea water in a position remote from a concentrate exhaust pipe 291 which discharges concentrated brine 19 back into the sea. The permeate discharge conduit 20 is flexible and delivers permeate 18, that is fresh water, into a holding tank on one of the bodies, or into a pipe for return to shore. A feedback conduit 294 extends from the permeate conduit 20 to the inlet conduit 17 and is controlled by a feedback valve means 296 which is responsive to salinity of the permeate fluid fraction discharged from the apparatus. A salinity detecting means, not shown, is exposed to the permeate fluid and cooperates with the valve 296 to activate the valve in response to variations in quality, ie. salinity of the permeate fluid so as to control fluid flow within the permeate conduit and feedback conduit. The feedback valve 296 can be set so as to be normally closed when the permeate fluid is below a predetermined salinity, ie. the conduit 294 is closed, and thus, the permeate fluid is acceptable for delivery to the user. Thus when permeate quality is above a predetermined limit, the permeate conduit is open and the feedback conduit is closed. However, the valve 296 opens the feedback conduit and closes the permeate conduit when the permeate salinity exceeds this predetermined amount, ie. the permeate quality is below the predetermined limited. In this situation the conduit 294 feeds the permeate fluid back into the inlet conduit 17 for reprocessing by the apparatus. Thus, in periods of little wave activity where the system operating pressure may be reduced, or immediately after start up or when flow through the apparatus is erratic such the permeate quality decreases, the apparatus can serve as its own second stage desalination device to improve the quality of the permeate in two successive operations.

Thus the method is characterized by detecting quality of the permeate fluid discharged by the membranes, and returning permeate fluid of unacceptable quality, ie. below a predetermined limit, to the pump inlet for reprocessing by the apparatus. Clearly the apparatus could be used for other applications using energy recovery devices, or manually powered devices, whereas the apparatus is reciprocated in a motion that is often characterized by non-constant amplitude and frequency.

Clearly, many different types of wave energy recovery devices or absorbers can be adapted to operate this device, which, as previously stated, is relatively independent of frequency and amplitude of stroke of the device. Because the valve actuation is dependent only on change in direction of force applying reciprocation action, short choppy waves producing high frequency short strokes of the displacer rod can be utilized, as well as longer, low frequency waves resulting from ocean swells. In view of the wide range of frequency and amplitude of waves, it is considered that this type of pump, which has a valve action independent of a complete pump stroke, is particularly applicable to utilizing wave energy, and because sea water is abundant, conveniently close and is also the source of the energy, pumping losses and storage problems are considerably reduced when compared with other means of recovering energy from ocean waves.

**Claims**

1. A pumping apparatus (12, 125, 220) for a membrane separation apparatus for separating a feed fluid (16) into permeate fluid (18) and concentrate fluid (19) fractions which respectively are permeated and rejected by selective membrane means (15), the pumping apparatus including: a reciprocating feed pump having a feed cylinder (25, 141, 231), a feed displacer means (24, 145, 235) and a displacer rod (26, 134, 239), the feed displacer means being reciprocable relative to the feed cylinder and dividing the feed cylinder into a pumping chamber (30, 147, 236) in which feed fluid is pressurized and an expansion chamber (31, 148, 237) in which the concentrate fluid fraction is depressurized; the displacer rod having an axis (27, 156, 1156) and cooperating with the feed displacer means to be reciprocable therewith and passing into the feed cylinder so that the pumping chamber has a swept volume greater than that of the expansion chamber; an inlet conduit (17, 158, 249) having an inlet valve (40, 159, 250) and communicating with the pumping chamber to admit feed fluid thereinto, an outfeed conduit (42, 161, 221) having an outfeed valve (44, 162, 252) and adapted to communicate the pumping chamber with the membrane means to deliver feed fluid to the membrane means, return conduit means (77, 178, 278) adapted to communicate the membrane means with the expansion chamber to conduct concentrate fluid from the membrane means, and an exhaust conduit (98, 170, 264) communicating with the expansion chamber to exhaust concentrate fluid; main valve means (118, 187, 276) having first and second open positions for controlling concentrate fluid flow from the expansion chamber to exhaust, and to the expansion chamber from the return conduit means respectively, the main valve means being responsive to direction of reciprocation action applied to the pump such that reversal of the reciprocation action reverses the main valve means; the apparatus being characterized by:
(a) the main valve means (118, 187, 276) being mounted for actuation relative to and along the axis (27, 156, 1156) of the displacer rod (26, 134, 239) and having at least one movable valve member (feed displacer member; 102, 181; valve sleeve: 243) which can move axially a limited amount relative to the displacer rod during stroke reversal, the amount of movement being sufficient to provide between the first and second open positions a closed intermediate position during which the main valve means is closed.

2. A pumping apparatus as claimed in Claim 1 characterized by:
(a) the main valve means (118, 187, 276) having at least one seat (75, 100) or one port (172, 179, 265) integral with the displacer rod (26, 134, 239), the movable valve member cooperating with the respective seat or port to open or close the respective seat or port following stroke reversal.

3. A pumping apparatus as claimed in Claim 1 or 2 further characterized by:
(a) the displacer rod (26, 134) has portions (46, 48; 198, 200) serving as plunger means to essentially equalize pressure differences across seats (75, 100) or ports (172, 197) of the main valve means (118, 187) that are about to be opened after commencement of a displacer rod stroke and prior to opening to such seats or ports of the main valve means.

4. A pumping apparatus as claimed in Claim 1, 2 or 3 characterized by:

(a) clearance (D, T; L, V) between portions of the main valve means (118, 187, 276) to provide lost motion therebetween upon reversal of pumping action prior to movement of the feed displacer means.

5. A pumping apparatus as claimed in Claim 1, 2, 3 or 4 characterized by:

(a) a recirculating pump (53) having a recirculating cylinder (55, 142) and a recirculating displacer means (57, 150), the recirculating displacer means being reciprocable relative to the recirculating cylinder and dividing the recirculating cylinder into a receiving chamber (59, 153) which receives concentrate fluid from the membrane means and a delivery chamber (61, 155) which delivers concentrate fluid to the membrane means (15),

(b) the return conduit means (77, 178) having three portions including a receiving conduit portion (67, 168) adapted to communicate the receiving chamber with the membrane means, a connecting conduit portion (73, 176) communicating the recirculating cylinder with the expansion chamber (31, 148), and a portion of the recirculating cylinder,

(c) the main valve means (118, 187) cooperating with the connecting conduit to control flow of concentrate fluid from the recirculating cylinder into the expansion chamber (31, 148).

6. A pumping apparatus as claimed in Claim 5 further characterized by:

(a) the recirculating displacer means and feed displacer means being connected by the displacer rod so that a discharge stroke of the recirculating displacer means arises in unison with an induction stroke of the feed displacer means,

(b) the volume of the recirculating cylinder (55, 142) occupied by the displacer rod (26, 134) increasing during a discharge stroke of concentrate fluid from the recirculating cylinder to the membrane means (15) during an induction stroke of the feed cylinder.

7. A pumping apparatus as claimed in Claim 5 or 6 further characterized by:

(a) the feed cylinder (25, 141) and recirculating cylinder (55, 142) being in tandem,

(b) the displacer rod (26, 134) carrying both the feed displacer means (24, 145) and the recirculating displacer means (57, 150) for simultaneous movement in the same direction upon actuation of the pump,

(c) the displacer rod (26, 134) having a connecting rod portion (46, 200) extending between the feed displacer means (24, 145) and the recirculating displacer means (57, 150).

8. A pumping apparatus as claimed in Claim 7 further characterized by:

(a) the displacer rod (26) having a recirculating rod portion (71) extending from the recirculating displacer means (57) on a side thereof remote from the connecting rod portion (46) so to pass through an end of the recirculating cylinder (55) remote from the feed cylinder (25), the recirculating rod portion having a cross sectional area different from the connecting rod portion.

9. A pumping apparatus as claimed in Claim 7 further characterized by:

(a) the displacer rod (26) having an expansion rod portion (48) extending from the feed displacer means (24) through the expansion chamber (31), the connecting rod portion (46) of the displacer rod (26) being a pumping rod portion extending from the feed displacer means (24) through the pumping chamber (30) to the recirculating displacer means (57), the expansion rod portion (48) having a cross sectional area greater than the pumping rod portion by a rod cross sectional area difference which defines approximately the permeate displacement of the feed pump per stroke,

(b) the recirculating rod portion (71) of the displacer rod (26) having a cross sectional area such that the said rod cross sectional area difference between the expansion rod portion and the pumping rod portion is approximately twice the difference in cross sectional areas between the recirculating rod portion and the pumping rod portion, with the cross sectional area of the recirculating rod portion being larger than the cross sectional area of the pumping rod portion.

10. A pumping apparatus as claimed in Claim 5, 6, 7, 8 or 9 further characterized by:

(a) a recirculating valve means (75, 80; 204, 212) associated with the recirculating pump (53) to control flow of concentrate fluid relative to the recirculating pump so that upon reversal of pumping action of the pump, the recirculating valve means shifts between two positions thereof.

11. A pumping apparatus as claimed in any one of Claims 1 to 10, characterized by:

(a) a feedback conduit (294) connecting the inlet conduit (17, 158, 249) with a permeate conduit (20),

(b) a feedback valve means (296) controlling flow within the feedback conduit (294) and the permeate conduit (20), the feedback valve means having a permeate quality detecting means exposed to permeate flow, permeate quality detecting means cooperating with valve actuating means to open the permeate conduit and to close the feedback conduit when permeate fluid quality is below the predetermined limit.

12. A method of membrane separation of a feed fluid (16) into permeate fluid (18) and concentrate fluid (19) fractions which respectively are permeated and rejected by selective membrane means (15), the membrane means being exposed to pressurized feed fluid supplied by a reciprocating pumping apparatus (12, 125, 220) having a reciprocating feed pump having a feed cylinder (25, 141, 231) and a feed displacer means (24, 145, 235) which are reciprocable relative to each other along an axis (27, 156 (1156), the displacer dividing the feed cylinder into a pumping chamber (30, 147, 236) in which feed fluid is pressurized and an expansion chamber (31, 148, 237) in which concentrate fluid is depressurized, a displacer rod (26, 134, 239) extending along the axis and carrying the feed displacer means for reciprocation therewith, the pump cooperating with valve means in conduit means which communicate with the membrane means, the valve means including a main valve means (118, 187, 276) mounted on the displacer rod for axial reciprocation between two open positions for controlling fluid flow relative to the expansion chamber, the method including the steps of: during an induction stroke, inducting feed fluid into the pumping chamber and simultaneously exhausting concentrate fluid from the expansion chamber, followed by reversing direction of reciprocating action applied to the pump means so as to move the main valve means between the two positions and subsequently during a pumping stroke pressurizing the feed fluid in the pumping chamber and simultaneously admitting pressurized concentrate fluid into the expansion chamber to supplement energy supplied to the displacer in the pumping stroke, the method being further characterized by:

(a) upon reversal of reciprocation action, causing relative movement between at least one valve member (feed displacer member: 102, 181; valve sleeve: 243) of the main valve means (118, 187, 276) and the displacer rod (26, 134, 239), the amount of movement being sufficient to provide between the first and second open positions a closed intermediate position during which the main valve means is closed so as to incur negligible pressure loss during valve actuation.

13. A method as claimed in Claim 12 characterized by:

(a) prior to movement of the feed displacer means (24, 145) following an induction stroke and reversal of reciprocating action, moving the displacer rod (26, 134) a limited amount so as to increase rod displacement within the feed cylinder (25, 141) so as to increase pressure within the expansion chamber (31, 148) prior to opening the main valve means (118, 187) to higher concentrate fluid pressure,

(b) prior to movement of the feed displacer means following a pumping stroke and reversal of reciprocating action, moving the displacer rod a limited amount so as to decrease rod displacement within the expansion chamber, so as to decrease pressure in the expansion chamber prior to opening the main valve means to lower exhaust pressure, said limited amounts being sufficient to approximately equalize pressure across seats (75, 100) or ports (172, 179) of the main valve means that are about to be opened, prior to opening of such ports.

14. A method as claimed in Claim 12 or 13 in which the pumping apparatus includes a recirculating pump (53) having a recirculating cylinder (55, 142) cooperating with the feed pump and the membrane means, the method being characterized by:

(a) during a discharge stroke of concentrate fluid from the recirculating cylinder to the membrane means, increasing volume of the displacer rod passing into the recirculating cylinder (recirculating rod portion: 71, 200) so as to maintain pressure applied to the membrane means to ensure permeate flow therethrough during an induction stroke of the feed cylinder.

15. A method as claimed in Claim 14 further characterized by:

(a) upon reversal of the reciprocating action, simultaneously actuating a recirculating valve means (75, 80; 204, 212) associated with the recirculating cylinder (55, 142) so as to control fluid flow relative to the recirculating cylinder.

16. A method as claimed in Claim 12, 13, 14 or 15 further characterized by:

(a) detecting quality of permeate fluid discharged by the membrane means (15),

(b) returning permeate fluid of quality below a predetermined limit to the inlet (17) of the pump for reprocessing by the apparatus.

**Patentansprüche**

1. Pumpe (12, 125, 220) für eine Membrantrennvorrichtung zum Trennen einer Speiseflüssigkeit (16) in durchlaufende Flüssigkeits-(18) und konzentrierte Flüssigkeitsfraktionen (19), die durch selektive Membranen (15) durchgelassen bzw. zurückgehalten werden, wobei die Pumpe aus einer Förderkolbenpumpe mit einem Förderzylinder (25, 141, 231), einem Förderschieber (24, 145, 235) und einer Schieberstange (26, 134, 239) besteht, der Förderschieber in Bezug zum Förderzylinder verschiebbar ist und den Förderzylinder in eine Pumpenkammer (30, 147, 236), in der die Speiseflüssigkeit unter Druck gesetzt wird, und in eine Expansionskammer (31, 148, 237), in der die konzentrierte Flüssigkeitsfraktion entspannt wird, teilt; die Schieberstange eine Achse (27, 156, 1156) aufweist und mit dem Förderschieber zusammenwirkend verschoben wird, derart dass die Pumpenkammer einen grösseren Hubraum aufweist als die Expansionskammer; durch eine in die Pumpenkammer führende Einlassleitung (17, 158, 249) mit einem Einlassventil (40, 159, 250) Flüssigkeit eingeleitet wird, eine Auslassleitung (42, 161, 221) mit einem Auslassventil (44, 162, 252) die Pumpenkammer mit der Membranvorrichtung verbindet, um dieser Speiseflüssigkeit zuzuführen, die Membranvorrichtung durch eine Rücklaufleitung (77, 178, 276) mit der Expansionskammer verbunden ist, um konzentrierte Flüssigkeit aus der Membranvorrichtung abzuleiten, und eine mit der Expansionskammer kommunizierende Ablassleitung (98, 170, 264) zum Abführen konzentrierter Flüssigkeit; ein Hauptventil (118, 187, 276) mit ersten und zweiten Offenstellungen zur Steuerung des Stromes der konzentrierten Flüssigkeit aus der Expansionskammer zur Ablassleitung bzw. zu der Expansionskammer aus der Rücklaufleitung, wobei das Hauptventil auf die Arbeitsrichtung der Pumpe anspricht, derart, dass der Umkehrvorgang der Bewegung das Hauptventil umkehrt, dadurch gekennzeichnet, dass

(a) das Hauptventil (118, 187, 276) arbeitsmässig der Achse (27, 156, 1156) der Schieberstange (26, 134, 239) zugeordnet und entlang dieser angeordnet ist und mindestens ein bewegliches Ventilglied (Förderschieberglied 102, 181; Ventilhülse 243) aufweist, das während des Umkehrhubes über eine begrenzte Strecke in Bezug zur Schieberstange axial bewegbar ist, wobei die Wegstrecke ausreichend ist, um zwischen der ersten und der zweiten offenen Stellung eine geschlossene mittlere Position zu schaffen, während der das Hauptventil geschlossen ist.

2. Pumpe nach Anspruch 1. dadurch gekennzeichnet, dass

(a) das Hauptventil (118, 187, 276) mindestens einen Sitz (75, 100) oder einen Durchlass (172, 179, 265) als integrierender Bestandteil der Schieberstange (26, 134, 239) aufweist und das bewegliche Ventilglied mit dem entsprechenden Sitz oder Durchlass zusammenwirkt, um nach der Hubumkehr den Sitz bzw. Durchlass zu öffnen oder zu schliessen.

3. Pumpe nach Anspruch 1 oder 2, dadurch gekennzeichnet, dass

(a) die Schieberstange (26, 134) aus Abschnitten (46, 48; 198, 200) besteht, die als Stössel dienen, um im wesentlichen Druckdifferenzen über den Sitzen (75, 100) oder Durchlässen (172, 197) des Hauptventils (118, 187) auszugleichen, die nach Beginn eines Schieberstangenhubes und vor dem Öffnen der Sitze oder Durchlässe des Hauptventils dabei sind zu öffnen.

4. Pumpe nach Anspruch 1, 2 oder 3, dadurch gekennzeichnet, dass

(a) zwischen Abschnitten des Hauptventils (118, 187, 276) ein Abstand (D, T; L, V) vorgesehen ist, um nach Umkehr des Pumpvorgangs vor der Bewegung des Förderschiebers zwischen den Abschnitten einen Leergang zu schaffen.

5. Pumpe nach Anspruch 1, 2, 3 oder 4, dadurch gekennzeichnet, dass

(a) eine Umwälzpumpe (53) mit einem Umwälzzylinder (55, 142) sowie ein Umwälzschieber (57, 150) vorgesehen sind, der Umwälzschieber in Bezug zum Umwälzzylinder verschiebbar ist und diesen Zylinder in eine Aufnahmekammer (59, 153) und eine Ausgabekammer (61, 155) teilt, wobei die Aufnahmekammer konzentrierte Flüssigkeit aus der Membranvorrichtung erhält und die Ausgabekammer konzentrierte Flüssigkeit zur Membranvorrichtung (15) fördert,

(b) die Rücklaufleitung (77, 178) drei Abschnitte aufweist, und zwar ein Aufnahmeabschnitt (67, 168), der die Aufnahmekammer mit der Membranvorrichtung verbindet, ein Verbindungsabschnitt (73, 176), der den Umwälzzylinder mit der Expansionskammer (31, 148) verbindet und ein Abschnitt des Umwälzzylinders,

(c) das Hauptventil (118, 187) mit der Verbindungsleitung zusammenwirkt, um den konzentrierten Flüssigkeitsstrom aus dem Umwälzzylinder in die Expansionskammer (31, 148) zu steuern.

6. Pumpe nach Anspruch 5, dadurch gekennzeichnet, dass

(a) der Umwälzschieber und der Förderschieber durch die Schieberstange miteinander verbunden sind, so dass ein Druckhub des Umwälzschiebers übereinstimmend mit einem Einsaughub der Schieberstange auftritt,

(b) das durch die Schieberstange (26, 134) eingenommene Volumen des Umwälzzylinders (55, 142) ansteigt, während eines Druckhubes konzentrierter Flüssigkeit aus dem Umwälzzylinder zur Membranvorrichtung (15) während eines Einsaughubes des Förderzylinders.

7. Pumpe nach Anspruch 5 oder 6, dadurch gekennzeichnet, dass

(a) der Förderzylinder (25, 141) und der Umwälzzylinder (55, 142) hintereinander angeordnet sind,

(b) die Schieberstange (26, 134) sowohl den Förderschieber (24, 145) als auch den Umwälzschieber (57, 150) trägt, so dass diese nach Betätigung der Pumpe gleichzeitig in gleicher Richtung bewegt werden,

(c) die Schieberstange (26, 134) eine Verbindungsstange (46, 200) aufweist, die sich zwischen dem Förderschieber (24, 145) und dem Umlaufschieber (57, 150) erstreckt.

8. Pumpe nach Anspruch 7, dadurch gekennzeichnet, dass

(a) die Schieberstange (26) einen umlaufenden Stangenabschnitt (71) aufweist, der von der der Verbindungsstange (46) abgekehrten Seite des Umwälzschiebers absteht, so dass er abgekehrt vom Förderzylinder (25) durch ein Ende des Umwälzzylinders (55) ragt, wobei der Stangenabschnitt einen Querschnittsbereich aufweist, der von demjenigen des verbindenden Stangenabschnitts abweicht.

9. Pumpe nach Anspruch 7, dadurch gekennzeichnet, dass

(a) die Schieberstange (26) einen Expansionsabschnitt (48) aufweist, der vom Förderschieber (24) ausgeht und durch die Expansionskammer (31) geführt ist, der Verbindungsabschnitt (46) der Schieberstange (26) ein Pumpenstangenteil darstellt, das ausgehend vom Förderschieber (24) durch die Pumpenkammer (30) zum Umwälzschieber (57) geführt ist, der Querschnittsbereich des Expansionsabschnitts (48) grösser ist als das Pumpenstangenteil, und zwar um eine Differenz, die in etwa die Verschiebung der Förderpumpe pro Hub bestimmt,

(b) der umlaufende Stangenabschnitt (71) der Schieberstange (26) einen solchen Querschnittsbereich aufweist, dass die Differenz des Schieberquerschnittbereichs zwischen dem Expansionsabschnitt und dem Pumpenstangenteil etwa der zweifachen Differenz der Querschnittsbereiche zwischen dem umlaufenden Stangenabschnitt und dem Pumpenstangenteil entspricht, wobei der Querschnittsbereich des Abschnitts des umlaufenden Stangenabschnitts grösser ist als der Querschnittsbereich des Pumpenstangenteils.

10. Pumpe nach Anspruch 5, 6, 7, 8 oder 9, dadurch gekennzeichnet, dass

(a) der Umwälzpumpe (53) ein Umwälzventil (75, 80; 204, 212) zugeordnet ist, um den Fluss der konzentrierten Flüssigkeit in Bezug zur Umwälzpumpe zu steuern, derart, dass nach Umkehr des Pumpvorgangs der Pumpe das Umwälzventil zwischen zwei Stellungen schaltet.

11. Pumpe nach einem der Ansprüche 1 bis 10, dadurch gekennzeichnet, dass

(a) eine Rückflussleitung (294) die Einlassleitung (17, 158, 249) mit einer durchlässigen Leitung (20) verbindet,

(b) ein Rückkoppelventil (296) den Fluss innerhalb der Rückflussleitung (294) und der Durchlassleitung (20) steuert, wobei das Rückkoppelventil eine Anzeigevorrichtung aufweist, die dem Strom der durchdringenden Flüssigkeit ausgesetzt ist und deren Qualität anzeigt und mit einer Vorrichtung zur Betätigung des Ventils zusammenwirkt, um die Rückflussleitung zu schliessen, wenn die Qualität der durchdringenden Flüssigkeit unter der vorbestimmten Grenze liegt.

12. Verfahren zum Membrantrennen einer Speiseflüssigkeit (16) in Fraktionen aus gereinigter Flüssigkeit (18) und aus konzentrierter Flüssigkeit (19), die durch selektive Membrane (15) durchgelassen bzw. verworfen werden, wobei die Membrane der unter Druck stehenden Speiseflüssigkeit ausgesetzt werden, die durch eine Kolben- oder Kurbelpumpe (12, 125, 220) geliefert wird, die eine Förderpumpe mit einem Förderzylinder (25, 141, 231) und einen Förderschieber (24, 145, 235) aufweist, die in Bezug zueinander entlang einer Achse (27, 156, 1156) verschiebbar sind, der Schieber den Förderzylinder in eine Pumpenkammer (30, 147, 236) und in eine Expansionkammer (31, 148, 237) teilt, wobei in der Pumpenkammer die Speiseflüssigkeit unter Druck steht, während in der Expansionskammer konzentrierte Flüssigkeit entspannt wird, eine Schieberstange (26, 134, 129) entlang der Achse angeordnet ist und den Förderschieber trägt und mit diesem bewegbar ist, die Pumpe mit einem Ventil zusammenwirkt, das in der Leitung vorgesehen ist, die mit der Membranvorrichtung verbunden ist und das ein Hauptventil (118, 187, 276) aufweist, welches an der Schieberstange montiert und axial zwischen zwei offenen Stellungen bewegbar ist, wodurch der Flüssigkeitsstrom in Bezug zur Expansionskammer gesteuert wird, wobei beim Verfahren während eines Einsaughubes, Speiseflüssigkeit in die Pumpenkammer eingeführt und gleichzeitig konzentrierte Speiseflüssigkeit aus der Expansionskammer ausgestossen wird, anschliessend die Richtung der Pumpenarbeit umgekehrt wird, derart, dass das Hauptventil zwischen den beiden Positionen bewegt wird und danach während eines Pumpenhubes die Speiseflüssigkeit in der Pumpenkammer unter Druck gesetzt und gleichzeitig unter Druck stehende konzentrierte Flüssigkeit in die Expansionskammer eingelassen wird, um die dem Schieber im Pumpenhub zugeführte Energie zu ergänzen, wobei das Verfahren ferner dadurch gekennzeichnet ist, dass

(a) nach Umkehr des Wechselvorganges eine relative Bewegung zwischen mindestens einem Ventil (Förderschieberglied: 102, 181; Ventilhülse: 243) des Hauptventils (118, 187, 276) und der Schieberstange (26, 134, 239) über eine ausreichende Wegstrecke hervorgerufen wird, um zwischen der ersten und der zweiten offenen Stellung eine geschlossene Zwischenstellung zu schaffen, während der das Hauptventil geschlossen ist, so dass während der Arbeit des Ventils ein vernachlässigbarer Druckverlust auftritt.

13. Verfahren nach Anspruch 12, dadurch gekennzeichnet, dass

(a) vor Beginn der Bewegung des Förderschiebers (24, 145) nach einem Einsaughub und Umkehr des Wechselvorgangs, die Schieberstange (26, 134) über eine begrenzte Wegstrecke bewegt wird, so dass die Stange innerhalb des Förderzylinders (25, 141) weiter verschoben und der Druck innerhalb der Expansionskammer (31, 148) vor dem Öffnen des Hauptventils (118, 187) erhöht wird, um den konzentrierten Flüssigkeitsdruck zu erhöhen.

(b) vor Beginn der Bewegung des Förderschiebers nach einem Pumpenhub und Umkehr des Wechselvorgangs, die Schieberstange über eine begrenzte Wegstrecke bewegt wird, um die Stange innerhalb der Expansionskammer weniger zu verschieben, so dass vor dem Öffnen des Hauptventils der Druck in der Expansionskammer und der Ausstossdruck gesenkt werden, wobei die begrenzten Wegstrecken ausreichend sind, um unmittelbar vor dem Öffnen der Durchlässe, den Druck über den Sitzen (75, 100) oder Durchlässen (172, 179) des Hauptventils etwa auszugleichen.

14. Verfahren nach Anspruch 12 oder 13, bei dem die Pumpe eine Umwälzpumpe (53) mit einem Umwälzzylinder (55, 142) ist, der mit der Förderpumpe und der Membranvorrichtung zusammenwirkt, dadurch gekennzeichnet, dass

(a) während eines Druckhubes von konzentrierter Flüssigkeit aus dem Umwälzzylinder zu der Membranvorrichtung, das in den Umwälzzylinder (umlaufender Stangenabschnitt: 71, 200) geleitete Volumen der Schieberstange vergrössert wird, so dass der auf die Membranvorrichtung ausgeübte Druck aufrechterhalten wird, um einen Durchfluss des gereinigten Stromes während eines Einsaughubes des Förderzylinders sicherzustellen.

15. Verfahren nach Anspruch 14, dadurch gekennzeichnet, dass

(a) nach Umkehr des Wechselvorgangs gleichzeitig ein dem Umwälzzylinder (55, 142) zugeordnetes Umwälzventil (75, 80; 204, 212) betätigt wird, so dass der Flüssigkeitsfluss in Bezug zum Umwälzzylinder gesteuert wird.

16. Verfahren nach Anspruch 12, 13, 14 oder 15, dadurch gekennzeichnet, dass

(a) die von der Membranvorrichtung (15) gelieferte Qualität der durchgelassenen Flüssigkeit angezeigt wird,

(b) die gereinigte Flüssigkeit, deren Qualität unter einer vorbestimmten Grenze liegt, dem Einlass (17) der Pumpe zur erneuter Behandlung in die Vorrichtung zurückgeführt wird.

## Revendications

1. Appareil de pompage (12, 125, 220) destiné à un appareil de séparation par une membrane destiné à séparer un fluide d'alimentation (16) en des fractions de fluide qui a traversé (18) et de concentrat (19) qui, respectivement, a traversé le dispositif à membrane sélective (15) et a été rejeté par celui-ci, l'appareil de pompage comprenant: une pompe alternative d'alimentation ayant un cylindre d'alimentation (25, 141, 231), un dispositif à piston auxiliaire d'alimentation (24, 145, 235) et une tige de piston auxiliaire (26, 134, 239), le dispositif à piston auxiliaire d'alimentation pouvant se déplacer en translation par rapport au cylindre d'alimentation et séparant celui-ci en une chambre de pompage (30, 147, 236) dans laquelle le fluide d'alimentation est mis sous pression et une chambre de détente (31, 148, 237) dans laquelle la fraction de concentrat est mise hors pression, la tige du piston auxiliaire ayant un axe (27, 156, 1156) et coopérant avec le dispositif à piston auxiliaire d'alimentation afin qu'elle se déplace en translation avec lui et passant dans le cylindre d'alimentation de manière que la chambre de pompage ait un volume balayé supérieur à celui de la chambre de détente, un conduit d'entrée (17, 158, 249) ayant un clapet d'entrée (40, 159, 250) et communiquant avec la chambre de pompage afin que du fluide d'alimentation y soit admis, un conduit d'alimentation de sortie (42, 161, 221) ayant un clapet (44, 162, 252) et destiné à faire communiquer la chambre de pompage avec le dispositif à membrane afin que le fluide d'alimentation soit transmis au dispositif à membrane, un dispositif à conduit de retour (77, 178, 278), destiné à mettre en communication le dispositif à membrane et la chambre de détente afin que du concentrat soit conduit à partir du dispositif à membrane, et un conduit d'échappement (98, 170, 264) communiquant avec la chambre de détente afin qu'il évacue du fluide concentré, un distributeur principal (118, 187, 276) ayant une première et une seconde position d'ouverture et destiné à régler la circulation du concentrat de la chambre de détente à l'évacuation, et à la chambre de détente à partir du dispositif à conduit de retour respectivement, le distributeur principal étant sensible au sens de l'action alternative appliquée à la pompe de manière que l'inversion de l'action alternative inverse la position du distributeur principal, l'appareil étant caractérisé par:

(a) le montage du distributeur principal (118, 196, 276) afin qu'il soit manoeuvré par rapport à l'axe (27, 156, 1156) de la tige du piston auxiliaire (26, 134, 239) et le long de cette tige, et ayant au moins un organe mobile d'obturation (organe de piston auxiliaire d'alimentation 102, 181; manchon d'obturation 243) qui peut se déplacer axialement sur une distance limitée par rapport à la tige du piston auxiliaire pendant l'inversion de la course, l'importance du déplacement suffisant pour que, entre la première et la seconde position d'ouverture, une position intermédiaire de fermeture soit formée dans laquelle le distributeur principale est fermé.

2. Appareil de pompage selon la revendication 1, caractérisé par:

(a) la présence dans le distributeur principal (118, 187, 276) d'au moins un siège (75, 100) ou d'une lumière (172, 179, 265) solidaire de la tige du piston auxiliaire (26, 134, 239), l'organe mobile d'obturation coopérant avec le siège ou la lumière afin que le siège ou la lumière respectif soit ouvert ou fermé après l'inversion de course.

3. Appareil de pompage selon l'une des revendications 1 et 2, caractérisé en outre en ce que:

(a) la tige de piston auxiliaire (26, 134) a des parties (46, 48; 198, 200) jouant le rôle d'un plongeur destiné à rendre pratiquement égales les différences de pression de part et d'autre des sièges (75, 100) ou des lumières (172, 197) du distributeur principal (118, 187) qui sont sur le point d'être ouverts après le début d'une course de la tige du piston auxiliaire et avant l'ouverture des sièges ou lumières du distributeur principal.

4. Appareil de pompage selon l'une quelconque des revendications 1 à 3, caractérisé par:

(a) un espace (D, T; L, V) entre les parties du distributeur principal (118, 187, 276), assurant un déplacement libre limité mutuel après inversion de l'action de pompage et avant déplacement du dispositif à piston auxiliaire d'alimentation.

5. Appareil de pompage selon l'une quelconque des revendications 1 à 4, caractérisé en ce que:

(a) une pompe de recirculation (53) a un cylindre de recirculation (55, 142) et un dispositif à piston auxiliaire de recirculation (57, 150), le dispositif à piston auxiliaire de recirculation étant mobile en translation par rapport au cylindre de recirculation et divisant celui-ci en une chambre de réception (59, 153) qui reçoit le concentrat du dispositif à membrane et une chambre de distribution (61, 155) qui distribue le concentrat au dispositif à membrane (15),

(b) le dispositif (77, 178) à conduit de retour a trois parties comprenant une partie de conduit de réception (67, 168) destinée à faire communiquer la chambre de réception avec le dispositif à membrane, une partie (73, 176) de conduit de raccordement faisant communiquer le cylindre de recirculation avec la chambre de détente (31, 148) et une partie du cylindre de recirculation,

(c) le distributeur principal (118, 187) coopère avec le conduit de raccordement au réglage du débit de concentrat du cylindre de recirculation à la chambre de détente (31, 148).

6. Appareil de pompage selon la revendication 5, caractérisé en ce que:

(a) le dispositif à piston auxiliaire de recirculation et le dispositif à piston auxiliaire d'alimentation sont raccordés par la tige de piston auxiliaire de manière qu'une course d'évacuation du dispositif à piston auxiliaire de recirculation ait lieu en même temps qu'une course d'aspiration du dispositif à piston auxiliaire d'alimentation.

(b) le volume du cylindre de recirculation (55, 142) occupé par la tige de piston auxiliaire (26,

19

134) augmente pendant une course d'évacuation de concentrat du cylindre de recirculation vers le dispositif à membrane (15) pendant une course d'aspiration du cylindre d'alimentation.

7. Appareil de pompage selon l'une des revendications 5 et 6, caractérisé en outre en ce que:

(a) le cylindre d'alimentation (25, 141) et le cylindre de recirculation (55, 142) sont montés en tandem,

(b) la tige de piston auxiliaire (26, 134) porte à la fois le dispositif (24, 145) à piston auxiliaire d'alimentation et le dispositif (57, 150) à piston auxiliaire de recirculation afin qu'ils se déplacent simultanément dans le même sens lors de la manoeuvre de la pompe,

(c) la tige de piston auxiliaire (26, 134) a une partie de tige de raccordement (46, 200) disposée entre le dispositif (24, 145) à piston auxiliaire d'alimentation et le dispositif (57, 150) à piston auxiliaire de recirculation.

8. Appareil de pompage selon la revendication 7, caractérisé en outre en ce que:

(a) la tige de piston auxiliaire (26) a une partie (71) de tige de recirculation dépassant du dispositif (57) à piston auxiliaire de recirculation du côté éloigné à la partie (46) de tige de raccordement afin qu'elle passe par une extrémité du cylindre de recirculation (55) qui est éloignée du cylindre d'alimentation (25), la partie de tige de recirculation ayant une section différente de celle de la partie de tige de raccordement.

9. Appareil de pompage selon la revendication 7, caractérisé en outre en ce que:

(a) la tige de piston auxiliaire (26) a une partie (48) de tige de détente dépassant du dispositif (24) à piston auxiliaire d'alimentation dans la chambre de détente (31), la partie (46) de tige de raccordement de la tige de piston auxiliaire (26) étant une partie de tige de pompage dépassant du dispositif (24) à piston auxiliaire d'alimentation dans la chambre de pompage (30) vers le dispositif (57) à piston auxiliaire de recirculation, la partie de tige de détente (48) ayant une section supérieure à celle de la partie de tige de pompage, avec une différence de section qui détermine approximativement le déplacement du fluide qui a traversé dans la pompe d'alimentation à chaque course,

(b) la partie (71) de tige de recirculation de la tige (26) de piston auxiliaire a une section telle que ladite différence des sections de tiges entre la partie de tige de détente et la partie de tige de pompage est à peu près égale au double de la différence de sections de la partie de tige de recirculation et de la partie de tige de pompage, la section de la partie de tige de recirculation étant supérieure à la section de la partie de tige de pompage.

10. Appareil de pompage selon l'une quelconque des revendications 5 à 9, caractérisé en outre en ce que:

(a) une soupape de recirculation (75, 80; 204, 212) est associée à la pompe de recirculation (53) et règle la circulation du concentrat par rapport à la pompe de recirculation afin que, après inversion de l'action de pompage de la pompe, la soupape de recirculation se déplace entre ses deux positions.

11. Appareil de pompage selon l'une quelconque des revendications 1 à 10, caractérisé par:

(a) un conduit de retour (294) reliant le conduit d'entrée (17, 159, 249) à un conduit (20) de fluide qui a traversé,

(b) une soupape de retour (296) réglant la circulation dans le conduit de retour (294) et dans le conduit (20) de fluide qui a traversé, la soupape de retour ayant un dispositif de détection de qualité du fluide qui a traversé, ce dispositif étant exposé au courant de fluide qui a traversé et coopérant avec un dispositif de manoeuvre de soupape afin que le conduit du fluide qui a traversé soit ouvert et que le conduit de retour soit fermé lorsque la qualité du fluide qui a traversé dépasse la limite prédéterminée.

12. Procédé de séparation d'un fluide d'alimentation (16) à l'aide d'une membrane en fractions d'un fluide qui a traversé (18) et d'un concentrat (19) qui a traversé un dispositif à membrane sélective (15) et qui a été rejeté par ce dispositif respectivement, le dispositif à membrane étant exposé au fluide d'alimentation sous pression transmis par un appareil alternatif de pompage (12, 125, 220) ayant une pompe alternative d'alimentation comportant un cylindre d'alimentation (25, 141, 231) et un dispositif à piston auxiliaire d'alimentation (24, 145, 235) mobile en translation mutuellement suivant un axe (27, 256, 1156), le piston auxiliaire divisant le cylindre d'alimentation en une chambre de pompage (30, 147, 236) dans laquelle le fluide d'alimentation est mis sous pression et une chambre de détente (31, 148, 237) dans laquelle le concentrat est mis hors pression, une tige de piston auxiliaire (26, 134, 239) disposée suivant l'axe et portant le dispositif à piston auxiliaire d'alimentation afin qu'elle se déplace en translation avec lui, la pompe coopérant avec un dispositif d'obturation placé dans un dispositif à conduit qui communique avec le dispositif à membrane, le dispositif d'obturation comprenant un distributeur (118, 187, 276) monté sur la tige de piston auxiliaire et destiné à se déplacer axialement entre deux positions d'ouverture afin que la circulation du fluide par rapport à la chambre de détente soit réglée, le procédé comprenant les opérations d'aspiration du fluide d'alimentation dans la chambre de pompage et simultanément d'évacuation du concentrat de la chambre de détente, pendant une course de détente, puis l'inversion du sens du déplacement alternatif appliqué au dispositif de pompage afin que le distributeur principal soit déplacé entre les deux positions, puis, pendant une cours de pompage, la mise sous pression du fluide d'alimentation dans la chambre de pompage et simultanément l'admission de concentrat sous pression dans la chambre de détente afin que l'énergie fournie au piston auxiliaire dans la course de pompage soit accrue, le procédé étant en outre caractérisé par:

(a) le déplacement relatif d'au moins un organe d'obturation (piston auxiliaire d'alimentation 102, 181; manchon d'obturation 243) du distributeur principal (118, 187, 276) et de la tige de piston auxiliaire (26, 134, 239), après inversion de l'action alternative, l'importance du déplacement suffisant pour que, entre la première et la seconde positions d'ouverture, une position intermédiaire de fermeture soit formée pendant laquelle le distributeur principal est fermé, les pertes de pression pendant la manoeuvre du distributeur étant ainsi négligeables.

13. Procédé selon la revendication 12, caractérisé par:

(a) le déplacement, avant déplacement du dispositif à piston auxiliaire d'alimentation (24, 145) qui suit une course d'aspiration et l'inversion de l'action alternative, de la tige de piston auxiliaire (26, 134) sur une distance limitée de manière que le déplacement de la tige soit accru dans le cylindre d'alimentation (24, 141) et que la pression dans la chambre de détente (31, 148) soit accrue avant ouverture du distributeur principal (118, 187) à la pression plus élevée du concentrat,

(b) le déplacement, avant déplacement du dispositif à piston auxiliaire d'alimentation qui suit une course de pompage et l'inversion de l'action alternative, de la tige de piston auxiliaire d'une distance limitée de manière que de déplacement de la tige soit réduit dans la chambre de détente, si bien que la pression dans la chambre de détente est réduite avant ouverture du distributeur principal afin que la pression d'évacuation soit réduite, les distances limitées étant suffisantes pour que les pressions de part et d'autre des sièges (75, 100) ou des lumières (172, 179) du distributeur principal qui sont sur le point de s'ouvrir soient pratiquement égalisées avant ouverture de ces lumières.

14. Procédé selon l'une des revendications 12 et 13, dans lequel l'appareil de pompage comprend une pompe de recirculation (53) ayant un cylindre de recirculation (55, 142) coopérant avec la pompe d'alimentation et avec le dispositif à membrane, le dispositif étant caractérisé par:

(a) l'augmentation du volume de la tige de piston auxiliaire passant dans le cylindre de recirculation (partie de tige de recirculation 71, 200), pendant une course d'évacuation de concentrat du cylindre de recirculation vers le dispositif à membrane, afin que la pression appliquée au dispositif à membrane, afin que la pression appliquée au dispositif à membrane soit maintenue et assure la circulation du fluide qui a traversé pendant une course d'aspiration du cylindre d'alimentation.

15. Procédé selon la revendication 14, caractérisé par:

(a) la manoeuvre simultanée, après inversion de l'action alternative, d'une soupape de recirculation (75, 80; 204, 21) associée au cylindre de recirculation (55, 142) afin que la circulation du fluide soit réglée par rapport au cylindre de recirculation.

16. Procédé selon l'une quelconque des revendications 12 à 15, caractérisé par:

(a) la détection de la qualité du fluide qui a traversé, évacué par le dispositif à membrane (15),

(b) le renvoi du fluide qui a traversé de qualité inférieure à une limite prédéterminée, à l'entrée (17) de la pompe afin qu'il soit retraité par l'appareil.

FIG. 1

0 059 275

FIG. 2

FIG. 6

0 059 275

FIG 3

FIG 4

0 059 275

FIG 5

0 059 275